(19) Europäisches Patentamt

European Patent Office

Office européen des brevets

(11) **EP 3 141 925 A1**

(12) **EUROPEAN PATENT APPLICATION**
published in accordance with Art. 153(4) EPC

(43) Date of publication:
**15.03.2017 Bulletin 2017/11**

(21) Application number: **14891747.9**

(22) Date of filing: **13.05.2014**

(51) Int Cl.:
*G01S 7/288* (2006.01)     *G01S 7/292* (2006.01)
*G01S 13/532* (2006.01)

(86) International application number:
**PCT/JP2014/062724**

(87) International publication number:
**WO 2015/173891 (19.11.2015 Gazette 2015/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation Chiyoda-ku Tokyo 100-8310 (JP)**

(72) Inventors:
• **AOYAMA, Isao**
  **Tokyo 100-8310 (JP)**
• **KAMEDA, Hiroshi**
  **Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **RADAR DEVICE**

(57)    Provided is a radar device to generate a plurality of motion hypotheses on a basis of a motion model of a target and to perform motion compensation by calculating a range compensation amount and a phase compensation amount of the target with respect to the sensor (1) on a basis of the motion hypothesis and the motion model.

FIG.1

Printed by Jouve, 75001 PARIS (FR)

**Description**

<u>TECHNICAL FIELD</u>

The present invention relates to a radar device to detect a target by radar.

<u>BACKGROUND ART</u>

Observation signals of a moving target with a low signal-to-noise ratio (SNR) may be buried in noise. For this reason, detection of a target is made possible by performing integration processing such as coherent integration on signals observed over a long time.

When long-time integration is performed on a target being accelerated, an integration loss occurs due to influence of the acceleration. The integration loss needs to be suppressed by performing motion compensation.

In the motion compensation, observation signals are divided at coherent pulse intervals (CPIs) where the velocity of motion of the target can be deemed as equivalent, thereby performing coherent integration within the CPI while performing incoherent integration between the CPIs (e.g., see Non-Patent Literature 1). In incoherent integration, acceleration of a target is determined and an integration direction is determined by the acceleration to perform integration. Integration is repeated on a plurality of accelerations to obtain a maximum integrated value.

Furthermore, there is a method to perform coherent integration between CPIs by dividing observation signals at CPIs and performing coherent integration within the CPI, in the same manner as the Non-Patent Literature 1, and then performing phase compensation for each CPI (e.g., see Non-Patent Literature 2). A phase compensation amount for each CPI can be calculated by determining acceleration of the target. Similarly to Non-Patent Literature 1, integration processing is repeated on a plurality of accelerations to obtain a maximum integrated value.

However, in each of the above methods, a motion model of a target is assumed as having constant acceleration. Therefore, there is a problem that an integration loss occurs with a target whose acceleration varies and thus detection performance of the target is degraded.

Moreover, in each of the methods mentioned above, the motion model of the target is assumed as having motion with constant acceleration in a range direction (direction toward the target seen from a sensor). However, the space where the target moves is a three-dimensional space of rectangular coordinates and thus the target does not always have motion with constant acceleration in the range direction. Therefore, there is a problem that an assumed motion model of the target and actual motion of the target do not match with each other and also an integration loss occurs, thereby deteriorating detection performance of the target.

For such problems that a motion model and actual motion of the target do not match with each other, a method of defining a motion model of a target in a three-dimensional space of rectangular coordinates is disclosed (e.g., see Patent Literature 1). This method is capable of minimizing a difference between the motion model and actual motion of the target, thereby mitigating an integration loss.

<u>LIST OF CITATIONS</u>

Patent Literature 1: JP 2011-174 866 A
Non-Patent Literature 1: "Improvement of Accelerating Target Detection Performance of a Doppler Radar Using PDI Processing", Fukushima et al., IEICE Transactions on Communications (B-II), Vol. J82-B, No. 11, pp. 2161-2169, Nov. 1999.
Non-Patent Literature 2: "An Algorithm for Detecting Constant Acceleration Target Using Phase Compensation between CPIs" Hara et al., Space, Aeronautical and Navigational Electronics, IEICE Technical Report, 106 (271), 5-9, Aug. 2006.

<u>SUMMARY OF THE INVENTION</u>

With the method of Patent Literature 1, however, range walk compensation (that is, compensation of variations in range) is performed while repeating detection and tracking of a target, thereby enhancing the accuracy of detection and tracking. In other words, it is premised that the target has already been detected. Therefore, there is a problem that a target with a low SNR is difficult to be detected in a situation where a position, velocity, and acceleration of the target are unknown and detection thereof requires performing integration over a long time.

This invention has been made to solve the aforementioned problems with an object to provide a radar device which is capable of performing motion compensation suitable for actual motion of a target and detection of a target with a low SNR requiring integration over a long time.

A radar device according to one aspect of the present invention includes:

a sensor to transmit transmission waves and to receive, as received waves, waves reflected from a target with respect to the transmission waves; a correlation processor to perform correlation processing between the transmission waves transmitted by the sensor and the received waves with respect to the transmission waves, which is received by the sensor; a correlation result storage to store resulting signals of the correlation processing performed by the correlation processor; a motion hypothesis generator to generate a plurality of motion hypotheses of the target on a basis of a motion model of the target; a motion hypothesis storage to store the motion hypotheses generated by the motion hypothesis generator; a range compensation amount calculator to calculate a range compensation amount of the target relative to the sensor on a basis of the motion hypothesis stored in the motion hypothesis storage and the motion model; a phase compensation amount calculator to calculate a phase compensation amount of the target relative to the sensor on a basis of the motion hypothesis stored in the motion hypothesis storage and the motion model; a motion compensator to perform motion compensation on the resulting signals of the correlation processing stored in the correlation result storage by using calculation results of the range compensation amount calculator and the phase compensation amount calculator; a signal integrator to perform coherent integration on resulting signals of the motion compensation performed by the motion compensator; a target detector to detect a position of the target from an integration result of the signal integrator; a hypothesis tester to compare a detection result of the target detector with a position of the target calculated from the motion hypothesis stored in the motion hypothesis storage, and to determine whether or not said motion hypothesis is correct; a motion hypothesis selector to obtain, from among the motion hypotheses determined by the hypothesis tester as being correct, a motion hypothesis corresponding to a large integrated value obtained by the signal integrator; and a target position outputter to output a position of the target corresponding to a motion hypothesis obtained by the motion hypothesis selector.

A radar device according to another aspect of the present invention includes:

a sensor to transmit transmission waves, to receive waves reflected from a target with respect to the transmission waves, and to convert the received reflection waves into received signals; a CPI (Coherent Pulse Interval) divider to divide, at intervals of CPIs, the received signals from the sensor; a CPI storage to store pieces of the received signals divided into by the CPI divider; a motion hypothesis generator to generate a plurality of motion hypotheses of the target on a basis of a motion model of the target; a motion hypothesis storage to store the motion hypotheses generated by the motion hypothesis generator; a phase compensator to perform phase compensation on the respective pieces of the received signals stored in the CPI storage on a basis of the motion hypothesis stored in the motion hypothesis storage and the motion model; a CPI FFT (Fast Fourier Transform) calculator to perform FFT on resulting signals of the phase compensation performed by the phase compensator; a motion integrator to integrate amplitude values of the same Doppler frequency bins in resulting signals of the FFT performed by the CPI FFT calculator; a target detector to detect a Doppler frequency of the target from an integration result of the motion integrator; a hypothesis tester to compare a detection result from the target detector with a Doppler frequency of the target calculated from the motion hypothesis stored in the motion hypothesis storage, and to determine whether or not said motion hypothesis is correct; a motion hypothesis selector to obtain, from among the motion hypotheses determined by the hypothesis tester as being correct, a motion hypothesis corresponding to a large integrated value obtained by the signal integrator; and a target velocity outputter to calculate velocity of the target from the Doppler frequency of the target corresponding to the motion hypothesis obtained by the motion hypothesis selector, and to output the calculated velocity.

A radar device according to a further aspect of the present invention includes:

a sensor to transmit transmission waves, to receive waves reflected from a target with respect to the transmission waves, and to convert the received reflection waves into received signals; a CPI (Coherent Pulse Interval) divider to divide, at intervals of CPIs, the received signals from the sensor; a CPI FFT calculator to perform FFT on the respective pieces of the received signals divided into by the CPI divider; a CPI storage to store resulting signals of the FFT performed by the CPI FFT calculator; a motion hypothesis generator to generate a plurality of motion hypotheses of the target on a basis of a motion model of the target; a motion hypothesis storage to store the motion hypotheses generated by the motion hypothesis generator; a motion estimator to calculate, on a basis of the motion hypothesis stored in the motion hypothesis storage, a Doppler frequency bin of the target at a time point corresponding to each of the CPIs; a motion integrator to perform incoherent integration on the respective pieces of the received signals stored in the CPI storage on a basis of the Doppler frequency bin of the target calculated by the motion estimator; a target detector to detect a Doppler frequency of the target from an integration result of the motion

**EP 3 141 925 A1**

integrator; a hypothesis tester to compare a detection result of the target detector and a Doppler frequency of the target calculated from the motion hypothesis stored in the motion hypothesis storage, and to determine whether or not said motion hypothesis is correct; a motion hypothesis selector to obtain, from among the motion hypotheses determined by the hypothesis tester as being correct, a motion hypothesis corresponding to a large integrated value obtained by the signal integrator; and a target velocity outputter to calculate velocity of the target from the Doppler frequency of the target corresponding to the motion hypothesis obtained by the motion hypothesis selector, and to output the calculated velocity.

The present invention configured as above is capable of performing motion compensation suitable for actual motion of a target and thereby allowing for detecting the target with a low SNR where integration over a long time is required.

BRIEF DESCRIPTION OF THE DRAWINGS

FIG. 1                      is a diagram illustrating a configuration of a radar device according to Embodiment 1 of the invention.

FIG. 2                      is a flowchart illustrating operations of the radar device according to the Embodiment 1 of the invention.

FIG. 3                      is a diagram illustrating an exemplary result of correlation processing by the radar device according to the Embodiment 1 of the invention.

FIGS. 4A and 4B             are diagrams illustrating a scope of an assumed position of a target in the radar device according to the Embodiment 1 of the invention. FIG. 4A is a diagram illustrating coverage of a beam spot and FIG. 4B is a diagram illustrating coverage of search range.

FIG. 5                      illustrates an outline of range compensation by the radar device according to the Embodiment 1 of the invention, where (a) is a diagram illustrating signals before range compensation and (b) is a diagram illustrating resulting signals of range compensation.

FIG. 6                      is a diagram explaining processing by a signal integrator of the radar device according to the Embodiment 1 of the invention, where (a) is a diagram illustrating resulting signals of phase compensation and (b) is a diagram illustrating a signal integration result (FR map).

FIG. 7                      is a diagram illustrating a configuration of a radar device according to Embodiment 2 of the invention.

FIG. 8                      is a flowchart illustrating operations of the radar device according to the Embodiment 2 of the invention.

FIG. 9                      is a diagram illustrating a configuration of a radar device according to Embodiment 3 of the invention.

FIG. 10                     is a diagram explaining operations of a search radar of the radar device according to the Embodiment 3 of the invention.

FIG. 11                     is a flowchart illustrating operations of the radar device according to the Embodiment 3 of the invention.

FIG. 12                     is a diagram illustrating a configuration of a radar device according to Embodiment 4 of the invention.

FIG. 13                     is a flowchart illustrating operations of the radar device according to the Embodiment 4 of the invention.

FIG. 14      is a diagram illustrating exemplary CPI division by the radar device according to the Embodiment 4 of the invention.

FIGS. 15A and 15B      are schematic diagrams illustrating a case of performing FFT without performing phase compensation and a case of performing FFT after phase compensation, respectively, in the radar device according to the Embodiment 4 of the invention.

FIG. 16      is a diagram illustrating a configuration of a radar device according to Embodiment 5 of the invention.

FIG. 17      is a flowchart illustrating operations of the radar device according to the Embodiment 5 of the invention.

FIG. 18      is a diagram illustrating a Doppler frequency bin corresponding to a position of a target in each CPI block in the radar device according to the Embodiment 5 of the invention.

FIG. 19      is a diagram illustrating a definition of D(k) of the radar device and a result of aligning positions of the target by shifting cells in each CPI block by D(k) cells, respectively, in the radar device according to the Embodiment 5 of the invention.

## DESCRIPTION OF EMBODIMENTS

Hereinafter, embodiments of the invention will be described in detail with reference to the drawings.

## Embodiment 1

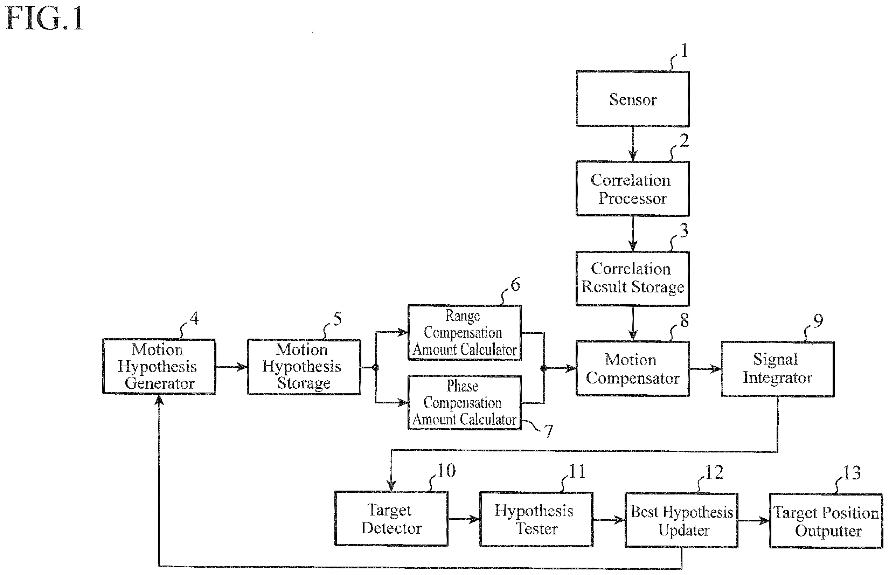

FIG. 1 is a diagram illustrating a configuration of a radar device according to Embodiment 1 of the invention.

The radar device includes, as illustrated in FIG. 1, a sensor 1, a correlation processor 2, a correlation result storage 3, a motion hypothesis generator 4, a motion hypothesis storage 5, a range compensation amount calculator 6, a phase compensation amount calculator 7, a motion compensator 8, a signal integrator 9, a target detector 10, a hypothesis tester 11, a best hypothesis updater (a motion hypothesis selector) 12 and a target position outputter 13.

The sensor 1 externally transmits transmission waves (e.g., electromagnetic waves) and receives, as received waves, reflection waves of the transmission waves reflected from a target being an observation object.

The correlation processor 2 performs correlation processing of the transmission waves transmitted from the sensor 1 and the received waves received by the sensor 1 with respect to the transmission waves.

The correlation result storage 3 stores resulting signals of the correlation processing of the correlation processor 2 by the number of observations at the sensor 1. The correlation result storage 3 is configured by an HDD, a DVD, a memory, or the like.

The motion hypothesis generator 4 generates a plurality of motion hypotheses of the target on a basis of a motion model of the target in a defined three-dimensional space of rectangular coordinates. During this process, the motion hypothesis generator 4 generates a combination of a position, velocity, acceleration, or the like of the target in a three-dimensional space of rectangular coordinates as a motion state amount of the target at the start of observation, which is used as the motion hypothesis. Also, when information indicating the best hypothesis from the best hypothesis updater 12 is acquired, the motion hypothesis generator 4 generates motion hypotheses on a basis of the best hypothesis.

The motion hypothesis storage 5 stores all the motion hypotheses generated by the motion hypothesis generator 4. The motion hypothesis storage 5 is configured by an HDD, a DVD, a memory, or the like.

The range compensation amount calculator 6 calculates a range compensation amount of the target with respect to the sensor 1 from the start of observation to a lapse of a certain time on a basis of the motion hypothesis stored in the motion hypothesis storage 5 and the motion model. During this process, the range compensation amount calculator 6 first estimates a motion state amount of the target from the start of observation to a lapse of a certain time based on the above motion hypothesis and motion model. Thereafter, the motion state amount of the target in a range direction from the sensor 1 to the target is calculated based on the estimated motion state amount.

Using a separately defined motion model in the range direction and the calculated motion state amount of the target in the range direction, a relative range variation amount of the target relative to the sensor 1 after a lapse of a certain time is calculated. The calculated relative range variation amount is further used as a range compensation amount required for coherent integration.

The phase compensation amount calculator 7 calculates a phase compensation amount of the target relative to the sensor 1 from the start of observation to a lapse of a certain time based on the motion hypothesis stored in the motion hypothesis storage 5 and the motion model. During this process, the phase compensation amount calculator 7 first estimates a motion state amount of the target from the start of observation to a lapse of a certain time on a basis of the above motion hypothesis and motion model while considering only influence equal to or more than an acceleration term of the target. Thereafter, the motion state amount of the target in a range direction from the sensor 1 toward the target is calculated based on the estimated motion state amount. Using the separately defined motion model in the range direction and the calculated motion state amount of the target in the range direction, a relative range variation amount of the target with respect to the sensor 1 after a lapse of a certain time attributable to only the influence equal to or more than the acceleration term is then calculated. Thereafter, the calculated relative range variation amount is converted into a phase variation amount, which is used as the phase compensation amount required for coherent integration.

The motion compensator 8 performs motion compensation on the resulting signals of the correlation processing stored in the correlation result storage 3 by using the range compensation amount calculated by the range compensation amount calculator 6 and the phase compensation amount calculated by the phase compensation amount calculator 7. During this process, the motion compensator 8 performs, as motion compensation, range compensation and phase compensation. The range compensation is performed to shift the resulting signals of the correlation processing in the range direction by the aforementioned range compensation amount. The phase compensation is performed to set back the phase of the resulting signals of the range compensation by the aforementioned phase compensation amount.

The signal integrator 9 performs coherent integration (FFT) on resulting signals of the motion compensation performed by the motion compensator 8 and calculates a frequency-range (FR) map. The FR map indicates a distribution of integrated values on a coordinate plane formed by a Doppler frequency axis and a range axis.

The target detector 10 detects a position of the target from an integration result of the signal integrator 9. During this process, the target detector 10 detects the range (a range bin) and the Doppler frequency (a Doppler frequency bin) of the target where a value in the FR map calculated by the signal integrator 9 is the largest, thereby detecting the position of the target.

The hypothesis tester 11 calculates a position (a range and a Doppler frequency) of the target from the motion hypothesis stored in the motion hypothesis storage 5 and determines whether or not the motion hypothesis is correct through comparison with the position of the target detected by the target detector 10. When the position of the target obtained from the integration result (FR map) and the position of the target obtained from the motion hypothesis used in the integration are apart from each other by a certain interval or more, the hypothesis tester 11 determines that the motion hypothesis is incorrect and rejects this motion hypothesis.

That is, when a difference between a range bin of the position of the target obtained from the integration result and a range bin of the position of the target obtained from the motion hypothesis exceeds the number of range bins corresponding to a constant multiple of a range observation accuracy of the sensor 1, the hypothesis tester 11 rejects the motion hypothesis used in the integration on a basis of the determination that an incorrect integration result has been obtained. Similarly, when a difference between a Doppler frequency bin of the position of the target obtained from the integration result and a Doppler frequency bin of the position of the target obtained from the motion hypothesis exceeds the number of Doppler frequency bins corresponding to a constant multiple of a Doppler observation accuracy of the sensor 1, the hypothesis tester 11 rejects the motion hypothesis used in the integration on a basis of the determination that an incorrect integration result has been obtained.

The best hypothesis updater 12 obtains, from among motion hypotheses which were not rejected by the hypothesis tester 11 (i.e., which was determined as being correct), the best motion hypothesis on a basis of the integration result of the signal integrator 9. During this process, the best hypothesis updater 12 determines, as the best hypothesis, the motion hypothesis having the largest integrated value from among the motion hypotheses. The best hypothesis updater 12 retains the best hypothesis and an integration result and position of the target used for the best hypothesis. Information about the best hypothesis retained in the best hypothesis updater 12 is notified to the motion hypothesis generator 4.

The target position outputter 13 outputs the position of the target of the best hypothesis, which is finally retained in the best hypothesis updater 12, by means of displaying on a display device, outputting to a file, or the like.

The correlation processor 2, the motion hypothesis generator 4, the range compensation amount calculator 6, the phase compensation amount calculator 7, the motion compensator 8, signal integrator 9, the target detector 10, the hypothesis tester 11, and the best hypothesis updater 12 can be implemented by program processing using a CPU on a basis of software.

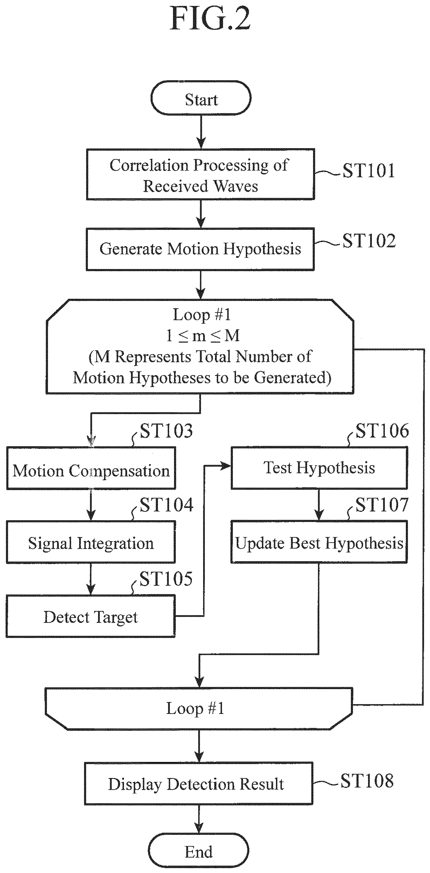

Next, operations of the radar device according to the Embodiment 1 will be described with FIG. 2.

In the operations of the radar device according to the Embodiment 1, as illustrated in FIG. 2, correlation processing on received waves is first performed (step ST101). That is, the sensor 1 transmits transmission waves with a sampling interval of $\Delta t$ and receives, as received waves, reflection waves of the transmission waves reflected from the target being an observation object. The correlation processor 2 performs correlation processing of the transmission waves and the received waves. In this correlation processing, a result of a fast Fourier transform (FFT) of the transmission waves is multiplied by an FFT result of the received waves, and Inverse-FFT is performed on the multiplication result. Thereafter, the correlation result storage 3 stores K resulting signals of the correlation processing. The value "K" indicates the number of times of sampling.

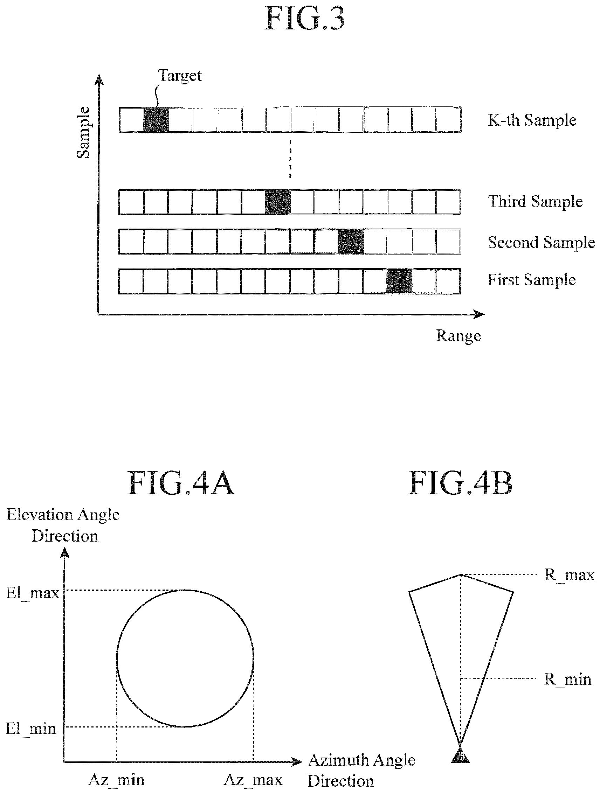

FIG. 3 illustrates an exemplary result of correlation processing.

As illustrated in FIG. 3, the resulting signals of correlation processing are calculated for each sample, and are discretized by a range resolution width of the sensor 1 in the range direction. Each of the discretized blocks is referred to as a "range bin". When a single target is being observed, there is a single range bin for a position of the target in each sampling. When the target has been accelerated, a range bin of a position of the target is different among each sample.

Next, the radar device generates, as a motion hypothesis, a motion state amount of the target at the start point of observation (step ST102). That is, the motion hypothesis generator 4 generates, as a motion state amount of the target, combinations of a position, velocity, acceleration, or the like of the target in a defined three-dimensional space of rectangular coordinates at the start point of observation based on a motion model of the target in the three-dimensional space of rectangular coordinates, which is used as the plurality of motion hypotheses. The motion hypothesis storage 5 stores the generated motion hypotheses.

Note that, the motion state amount generated by the motion hypothesis generator 4 includes a position, velocity, acceleration, or the like of the target in the three-dimensional space of rectangular coordinates. However, the motion state amount included in a motion hypothesis may vary depending on a motion model assumed for a target.

For example, when a motion model of a target has constant acceleration, while a motion state amount is defined by the following Formula (1), the motion model can be defined by the following Formula (2).

$$\mathbf{X}_k = \begin{bmatrix} x_k & y_k & z_k & \dot{x}_k & \dot{y}_k & \dot{z}_k \end{bmatrix}^T \qquad (1)$$

$$\mathbf{X}_{k+1} = \mathbf{\Phi} \mathbf{X}_k + \mathbf{\Gamma} \mathbf{w} \qquad (2)$$

In the Formula (1), $(x_k, y_k, z_k)$ denote a position of the target and (x dot $_k$, y dot $_k$, z dot $_k$) denotes the velocity of the target. In the Formula (2), values $\mathbf{\Phi}$, $\mathbf{\Gamma}$, and w are specified by the following Formulas (3), (4), and (5), respectively.

$$\mathbf{\Phi} = \begin{bmatrix} \mathbf{I}_{3\times3} & \Delta t \mathbf{I}_{3\times3} \\ \mathbf{0}_{3\times3} & \mathbf{I}_{3\times3} \end{bmatrix} \qquad (3)$$

$$\mathbf{\Gamma} = \begin{bmatrix} \frac{1}{2} \Delta t^2 \mathbf{I}_{3\times3} \\ \Delta t \mathbf{I}_{3\times3} \end{bmatrix} \qquad (4)$$

$$\mathbf{w} = \begin{bmatrix} \ddot{x} & \ddot{y} & \ddot{z} \end{bmatrix}^T \qquad (5)$$

In the Formula (5), (x double dots, y double dots, z double dots) denotes acceleration of the target.

In this case, an initial value of the motion state amount is assumed as the motion hypothesis. Thus, the motion hypothesis is indicated by a combination of "position, velocity, and acceleration", which is defined by the following Formula (6). Since the plurality of motion hypotheses is generated, "m" in the Formula (6) denotes a serial number allotted to the individual motion hypotheses.

$$\mathbf{H}_m = \begin{bmatrix} x_{m,1} & y_{m,1} & z_{m,1} & \dot{x}_{m,1} & \dot{y}_{m,1} & \dot{z}_{m,1} & \ddot{x}_{m,1} & \ddot{y}_{m,1} & \ddot{z}_{m,1} \end{bmatrix} \qquad (6)$$

Next, procedures for generating a hypothesis by the motion hypothesis generator 4 will be described.

When motion of the target is assumed as being motion with constant acceleration, a position, velocity, and acceleration of the target are set within an assumed scope in the motion hypothesis.

An assumed scope of the position of the target will be described with FIGS. 4A and 4B.

As illustrated in FIG. 4A, a maximum value and a minimum value in an azimuth angle direction of a beam spot of the sensor 1 are denoted as Az_max and Az_min, respectively. Also, a maximum value and a minimum value in an elevation angle direction of the beam spot are denoted as El_max and El_min, respectively. As illustrated in FIG. 4B, a maximum value and a minimum value of a search range are denoted as R_max and R_min, respectively.

From these values described above, coverage in the three-dimensional space of rectangular coordinates is calculated by means of coordinate transformation. Calculated maximum values and minimum values in the respective coordinates are denoted as x_max, x_min, y_max, y_min, z_max, and z_min. In this case, a hypothesis of position may range in an x coordinate from x_max to x_min, range in a y coordinate from y_max to y_min, and range in z coordinate from z_max to z_min.

Furthermore, on a basis of motion performance of the target being an object, a maximum value and minimum value of velocity are denoted as v_max and v_min, respectively, and a maximum value and minimum value of acceleration are denoted as a_max and a_min, respectively. Moreover, a travelling direction of the target is specified by an elevation angle and azimuth angle. A maximum value and a minimum value of the elevation angle of the target are denoted as TEl_max and TEl_min, respectively, and a maximum value and a minimum value of the azimuth angle of the target are denoted as TAz_max and TAz_min, respectively.

From these values v_max, v_min, a_max, a_min, TEl_max, TEl_min, TAz_max, and TAz_min, scopes of velocity and acceleration along the x axis, y axis, and z axis are calculated.

A maximum value and a minimum value of velocity along the x axis are denoted as vx_max and vx_min, respectively. A maximum value and a minimum value of velocity along the y axis are denoted as vy_max and vy_min, respectively. A maximum value and a minimum value of velocity along the z axis are denoted as vz_max and vz_min, respectively. Also, a maximum value and a minimum value of acceleration along the x axis are denoted as ax_max and ax_min, respectively. A maximum value and a minimum value of acceleration along the y axis are denoted as ay_max and ay_min, respectively. A maximum value and a minimum value of acceleration along the z axis are denoted as az_max and az_min, respectively.

In this case, hypothetical velocity may range from vx_max to vx_min along the x axis, and may range from vy_max to vy_min along the y axis, and may range from vz_max to vz_min along the z axis. Further, hypothetical acceleration may range from ax_max to ax_min along the x axis, and may range from ay_max to ay_min along the y axis, and may range from az_max to az_min along the z axis.

The motion hypothesis generator 4 generates candidate motion hypotheses by dividing each of the scopes of the hypothetical values in a monospaced manner. For example, assuming that a division width is denoted as $\Delta x$ for position along the x axis, candidate hypotheses for a position along the x axis include {x_min, x_min+$\Delta x$, x_min+2$\Delta x$, x_min+3$\Delta x$, ..., x_max}. Candidate motion hypotheses are generated also for other positions, velocity, and acceleration in a similar manner to above. All the combinations of them are stored in the motion hypothesis storage 5 as motion hypotheses.

A motion model of the target is not limited to motion with constant acceleration expressed by the Formulas (1) and (2), but instead may be defined as a motion model of a higher order. For example, in a motion model where acceleration varies with a constant change rate of acceleration, a motion state amount and motion model of the target are expressed by Formulas (7) and (8), respectively.

$$\mathbf{X}_k = \begin{bmatrix} x_k & y_k & z_k & \dot{x}_k & \dot{y}_k & \dot{z}_k & \ddot{x}_k & \ddot{y}_k & \ddot{z}_k \end{bmatrix}^T \qquad (7)$$

$$\mathbf{X}_{k+1} = \mathbf{\Phi}\mathbf{X}_k + \mathbf{\Gamma}\mathbf{w} \qquad (8)$$

The values $\Phi$, $\Gamma$, and w are expressed by the following Formulas (9), (10), and (11), respectively.

$$\mathbf{\Phi} = \begin{bmatrix} \mathbf{I}_{3\times3} & \Delta t \mathbf{I}_{3\times3} & \frac{1}{2}\Delta t^2 \mathbf{I}_{3\times3} \\ \mathbf{0}_{3\times3} & \mathbf{I}_{3\times3} & \Delta t \mathbf{I}_{3\times3} \\ \mathbf{0}_{3\times3} & \mathbf{0}_{3\times3} & \mathbf{I}_{3\times3} \end{bmatrix} \qquad (9)$$

$$\mathbf{\Gamma} = \begin{bmatrix} \dfrac{1}{6}\Delta t^3 \mathbf{I}_{3\times 3} \\[2mm] \dfrac{1}{2}\Delta t^2 \mathbf{I}_{3\times 3} \\[2mm] \Delta t \mathbf{I}_{3\times 3} \end{bmatrix} \qquad (10)$$

$$\mathbf{w} = \begin{bmatrix} \dddot{x} & \dddot{y} & \dddot{z} \end{bmatrix}^T \qquad (11)$$

In the Formula (11), (x triple dots, y triple dots, z triple dots) denotes a change rate of acceleration of the target.

In the motion model where acceleration varies with a constant change rate of acceleration, a motion hypothesis is further defined by the following Formula (12).

$$\mathbf{H}_m = \begin{bmatrix} x_{m,1} & y_{m,1} & z_{m,1} & \dot{x}_{m,1} & \dot{y}_{m,1} & \dot{z}_{m,1} & \ddot{x}_{m,1} & \ddot{y}_{m,1} & \ddot{z}_{m,1} & \dddot{x}_{m,1} & \dddot{y}_{m,1} & \dddot{z}_{m,1} \end{bmatrix}^T \qquad (12)$$

The radar device repeats executing processing of steps ST103 to ST107 on M motion hypotheses stored in the motion hypothesis storage 5. Hereinafter, processing on an m-th motion hypothesis stored in the motion hypothesis storage 5 will be described.

First, the range compensation amount calculator 6, the phase compensation amount calculator 7, and the motion compensator 8 of the radar device perform motion compensation on resulting signals of the correlation processing by using the m-th motion hypothesis stored in the motion hypothesis storage 5 (step ST103). Hereinafter, processing of the range compensation amount calculator 6, the phase compensation amount calculator 7, and the motion compensator 8 will be described.

First, the range compensation amount calculator 6 calculates a range compensation amount of the target with respect to the sensor 1 at the time after k times of sampling (that is, after k*Δt from the start of observation) by using the m-th motion hypothesis and motion model. Hereinafter, calculation procedures of a range compensation amount are described for a case where motion with constant acceleration is assumed for the motion model of the target.

First, a motion state amount of the sensor 1 is defined by the following Formula (13). The motion state amount of the sensor 1 is assumed as being already known.

$$\mathbf{X}_{s,k} = \begin{bmatrix} x_{s,k} & y_{s,k} & z_{s,k} & \dot{x}_{s,k} & \dot{y}_{s,k} & \dot{z}_{s,k} & \ddot{x}_{s,k} & \ddot{y}_{s,k} & \ddot{z}_{s,k} \end{bmatrix}^T \qquad (13)$$

In the calculation of a range compensation amount, relative variation in range needs to be obtained. For this need, with an assumption that the sensor 1 and target are located at the same position at the start of observation, range between the sensor 1 and target after k times of sampling is calculated. During this process, initial velocity and acceleration of the target depend on the motion hypothesis. When an m-th motion hypothesis $H_m$ is used, an initial motion state amount and acceleration of the target are expressed by the following Formulas (14) and (15).

$$\mathbf{X}_1 = \begin{bmatrix} x_{s,1} & y_{s,1} & z_{s,1} & \dot{x}_{m,1} & \dot{y}_{m,1} & \dot{z}_{m,1} \end{bmatrix}^T \qquad (14)$$

$$\mathbf{w} = \begin{bmatrix} \ddot{x}_m & \ddot{y}_m & \ddot{z}_m \end{bmatrix}^T \qquad (15)$$

Subsequently, after setting the Formula (14) as an initial value, a motion state amount of the target after k-1 times of sampling is calculated from the Formula (2) by using the acceleration obtained by the Formula (15). The calculated motion state amount is expressed by the following Formula (16).

$$\mathbf{X}'_{k-1} = \begin{bmatrix} x'_{k-1} & y'_{k-1} & z'_{k-1} & \dot{x}'_{k-1} & \dot{y}'_{k-1} & \dot{z}'_{k-1} \end{bmatrix}^T \qquad (16)$$

A relative position $p'_{k-1}$, a relative velocity $v'_{k-1}$, and a relative acceleration $a'_{k-1}$ of the target relative to the sensor 1 in the three-dimensional space of rectangular coordinates after k-1 times of sampling are obtained from Formulas (17), (18), and (19), respectively.

$$\mathbf{p}'_{k-1} = \begin{bmatrix} x'_{k-1} - x_{s,k-1} & y'_{k-1} - y_{s,k-1} & z'_{k-1} - z_{s,k-1} \end{bmatrix}^T \qquad (17)$$

$$\mathbf{v}'_{k-1} = \begin{bmatrix} \dot{x}'_{k-1} - \dot{x}_{s,k-1} & \dot{y}'_{k-1} - \dot{y}_{s,k-1} & \dot{z}'_{k-1} - \dot{z}_{s,k-1} \end{bmatrix}^T \qquad (18)$$

$$\mathbf{a}'_{k-1} = \begin{bmatrix} \ddot{x}'_{k-1} - \ddot{x}_{s,k-1} & \ddot{y}'_{k-1} - \ddot{y}_{s,k-1} & \ddot{z}'_{k-1} - \ddot{z}_{s,k-1} \end{bmatrix}^T \qquad (19)$$

Subsequently, with the above values $p'_{k-1}$, $v'_{k-1}$, and $a'_{k-1}$, motion specifications (i.e., range, change rate of range, acceleration, and change rate of acceleration) in the range direction are calculated from the following Formulas (20) to (23).

$$R'_{k-1} = \left\| \mathbf{p}'_{k-1} \cdot \mathbf{p}'^T_{k-1} \right\| \qquad (20)$$

$$\dot{R}'_{k-1} = \frac{\mathbf{p}'_{k-1} \cdot \mathbf{v}'^T_{k-1}}{R'_{k-1}} \qquad (21)$$

$$\ddot{R}'_{k-1} = -\frac{\dot{R}'_{k-1}(\mathbf{p}'_{k-1} \cdot \mathbf{v}'^T_{k-1}) + R'_{k-1}(\mathbf{v}'_{k-1} \cdot \mathbf{v}'^T_{k-1} + \mathbf{p}'_{k-1} \cdot \mathbf{a}'^T_{k-1})}{R'^2_{k-1}} \qquad (22)$$

$$\dddot{R}'_{k-1} = \dddot{R}'_{k-1,1} + \dddot{R}'_{k-1,2} + \dddot{R}'_{k-1,3} \qquad (23)$$

In the Formula (23), (R' triple dots $_{x-1,1}$, R' triple dots $_{k-1,2}$, R' triple dots $_{k-1,3}$) are expressed by the following Formulas (24) to (26).

$$\dddot{R}'_{k-1,1} = \frac{3\mathbf{v}'_{k-1} \cdot \mathbf{a}'^T_{k-1}}{R'_{k-1}} \qquad (24)$$

$$\dddot{R}'_{k-1,2} = -\frac{3}{R'^3_{k-1}} \left\{ \mathbf{p}'_{k-1} \cdot \mathbf{v}'^T_{k-1} \cdot \left( \mathbf{p}'_{k-1} \cdot \mathbf{a}'^T_{k-1} + \mathbf{v}'_{k-1} \cdot \mathbf{v}'^T_{k-1} \right)^T \right\} \qquad (25)$$

$$\dddot{R}'_{k-1,3} = \frac{3}{R'^5_{k-1}} \left( \mathbf{p}'_{k-1} \cdot \mathbf{v}'^T_{k-1} \right)^3 \qquad (26)$$

Furthermore, a motion model taking into consideration of a change rate of acceleration in the range direction is expressed by the following Formula (27). A value $R'_{C,k}$ obtained from the Formula (27) is used as a relative change amount in the range direction after k times of sampling, namely, a range compensation amount.

$$R'_{C,k} = R'_{k-1} + \dot{R}'_{k-1}\Delta t + \frac{1}{2}\ddot{R}'_{k-1}\Delta t^2 + \frac{1}{6}\dddot{R}'_{k-1}\Delta t^3 \qquad (27)$$

Assuming that the number of times of sampling to perform integration is K, the range compensation amount calculator 6 calculates K range compensation quantities for k= 1 to K.
By implementing the above procedures, the range compensation amount calculator 6 can calculate the range compensation amount.

Subsequently, the phase compensation amount calculator 7 calculates a phase compensation amount of the target relative to the sensor 1 after k samples, which takes into consideration of only the influence equal to or more than the acceleration term, by using the m-th motion hypothesis and motion model. Hereinafter, calculation procedures of a phase compensation amount are described for a case where motion with constant acceleration is assumed for the motion model of the target.

First, in the same manner to the range compensation amount calculator, a motion state amount of the sensor 1 is defined by the Formula (13).

In order to obtain relative range variation taking into consideration of only the influence equal to or more than the acceleration term, a motion hypothesis is used for acceleration by assuming that an initial position and an initial velocity of the target are equivalent to a position and a velocity of the sensor 1. In other words, an initial motion state amount and acceleration of the target are defined by the following Formulas (28) and (29).

$$\mathbf{X}_1 = \begin{bmatrix} x_{s,1} & y_{s,1} & z_{s,1} & \dot{x}_{s,1} & \dot{y}_{s,1} & \dot{z}_{s,1} \end{bmatrix}^T \quad (28)$$

$$\mathbf{w} = \begin{bmatrix} \ddot{x}_m & \ddot{y}_m & \ddot{z}_m \end{bmatrix}^T \quad (29)$$

Next, after setting the Formula (28) as an initial value, a motion state amount of the target after k-1 times of sampling is calculated from the Formula (2) by using acceleration obtained by the Formula (29). The calculated motion state amount is expressed by the following Formula (30).

$$\mathbf{X}''_{k-1} = \begin{bmatrix} x''_{k-1} & y''_{k-1} & z''_{k-1} & \dot{x}''_{k-1} & \dot{y}''_{k-1} & \dot{z}''_{k-1} \end{bmatrix}^T \quad (30)$$

Subsequently, a relative position $p''_{k-1}$, a relative velocity $v''_{k-1}$, relative acceleration $a''_{k-1}$ of the target relative to the sensor 1 in the three-dimensional space of rectangular coordinates after k-1 times of sampling are obtained by the following Formulas (31), (32), and (33), respectively.

$$\mathbf{p}''_{k-1} = \begin{bmatrix} x''_{k-1} - x_{s,k-1} & y''_{k-1} - y_{s,k-1} & z''_{k-1} - z_{s,k-1} \end{bmatrix}^T \quad (31)$$

$$\mathbf{v}''_{k-1} = \begin{bmatrix} \dot{x}''_{k-1} - \dot{x}_{s,k-1} & \dot{y}''_{k-1} - \dot{y}_{s,k-1} & \dot{z}''_{k-1} - \dot{z}_{s,k-1} \end{bmatrix}^T \quad (32)$$

$$\mathbf{a}''_{k-1} = \begin{bmatrix} \ddot{x}''_{k-1} - \ddot{x}_{s,k-1} & \ddot{y}''_{k-1} - \ddot{y}_{s,k-1} & \ddot{z}''_{k-1} - \ddot{z}_{s,k-1} \end{bmatrix}^T \quad (33)$$

Using the above values $p''_{k-1}$, $v''_{k-1}$, and $a''_{k-1}$, motion specifications (i.e., range, change rate of range, acceleration, and change rate of acceleration) in the range direction are calculated by the following Formulas (34) to (37).

$$R''_{k-1} = \left\| \mathbf{p}''_{k-1} \cdot \mathbf{p}''^T_{k-1} \right\| \quad (34)$$

$$\dot{R}''_{k-1} = \frac{\mathbf{p}''_{k-1} \cdot \mathbf{v}''^T_{k-1}}{R''_{k-1}} \quad (35)$$

$$\ddot{R}''_{k-1} = -\frac{\dot{R}''_{k-1}(\mathbf{p}''_{k-1} \cdot \mathbf{v}''^T_{k-1}) + R''_{k-1}(\mathbf{v}''_{k-1} \cdot \mathbf{v}''^T_{k-1} + \mathbf{p}''_{k-1} \cdot \mathbf{a}''^T_{k-1})}{R''^2_{k-1}} \quad (36)$$

$$\dddot{R}''_{k-1} = \dddot{R}''_{k-1,1} + \dddot{R}''_{k-1,2} + \dddot{R}''_{k-1,3} \qquad (37)$$

In the Formula (37), (R" triple dots $_{k-1,1}$, R" triple dots $_{k-1,2}$, R" triple dots $_{k-1,3}$) are defined by the following Formulas (38) to (40).

$$\dddot{R}''_{k-1,1} = \frac{3\mathbf{v}''_{k-1} \cdot \mathbf{a}''^{T}_{k-1}}{R''_{k-1}} \qquad (38)$$

$$\dddot{R}''_{k-1,2} = -\frac{3}{R''^{3}_{k-1}} \left\{ \mathbf{p}''_{k-1} \cdot \mathbf{v}''^{T}_{k-1} \cdot \left( \mathbf{p}''_{k-1} \cdot \mathbf{a}''^{T}_{k-1} + \mathbf{v}''_{k-1} \cdot \mathbf{v}''^{T}_{k-1} \right)^{T} \right\} \qquad (39)$$

$$\dddot{R}''_{k-1,3} = \frac{3}{R''^{5}_{k-1}} \left( \mathbf{p}''_{k-1} \cdot \mathbf{v}''^{T}_{k-1} \right)^{3} \qquad (40)$$

Next, the phase compensation amount calculator 7 obtains a range variation amount $R''_{C,k}$ taking into consideration of only the influence equal to or more than the acceleration term from the motion model further considering a change rate of acceleration in the range direction expressed by the following Formula (41).

$$R''_{C,k} = R''_{k-1} + \dot{R}''_{k-1}\Delta t + \frac{1}{2}\ddot{R}''_{k-1}\Delta t^{2} + \frac{1}{6}\dddot{R}''_{k-1}\Delta t^{3} \qquad (41)$$

The phase compensation amount calculator 7 calculates a phase compensation amount $\Delta\theta''_{k}$ corresponding to the range variation amount $R''_{C,k}$ from the following Formula (42).

$$\Delta\theta''_{k} = -\frac{2\pi R''_{C,k}}{\lambda} \qquad (42)$$

In the Formula (42), $\lambda$ denotes a transmission wavelength of the sensor 1.
When the number of times of sampling to perform integration is K, the phase compensation amount calculator 7 calculates K phase compensation quantities of k= 1 to K.
With the above procedures, the phase compensation amount calculator 7 can calculate the phase compensation amount.
The motion compensator 8 performs range compensation by using the range compensation amount $R'_{C,k}$ calculated by the range compensation amount calculator 6 such that a position of the target according to a resulting signal of correlation processing on the k-th sample stored in the correlation result storage 3 is aligned to a position of the target according to a resulting signal of correlation processing on the first sample. Hereinafter procedures for the range compensation are described.
Since the resulting signals of the correlation processing are discretized by a width of one range bin for range resolution, the number of range bins $BR_{C,k}$ corresponding to $R'_{C,k}$ is obtained from the following Formula (43). In the Formula (43), "ceil ()" denotes a function to round up decimal places of a quotient.

$$BR_{C,k} = ceil\left( \frac{R'_{C,k}}{\Delta R} \right) \qquad (43)$$

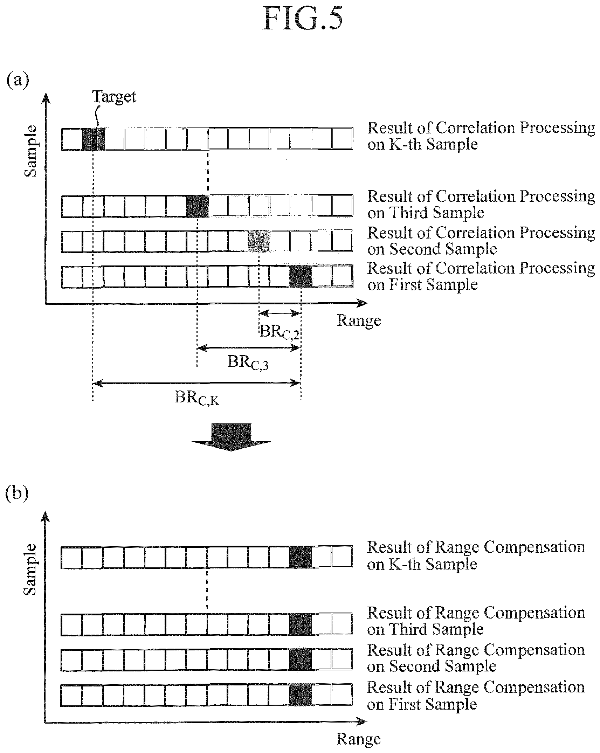

Next, the resulting signal of the correlation processing on the k-th sample is shifted by $BR_{C,k}$ bins toward the position of the target of the first sample. The shift direction depends on a sign of the value $R'_{C,k}$.
An outline of range compensation is illustrated in FIG. 5. As illustrated in FIG. 5, by shifting the resulting signals of the correlation processing on the second and subsequent samples by the range compensation amount, the range bins of the target are aligned.
In order to detect the target by integration processing, it is only required to perform coherent integration for each range bin on a result of range compensation where range bins of the target are aligned. However, when the target has acceleration, phase shift occurs among the samples and thus phase compensation has to be performed prior to the coherent integration.

Therefore, the motion compensator 8 performs phase compensation on a resulting signal of the range compensation of the k-th sample by using a phase compensation amount $\Delta\theta''_k$ of the k-th sample, which is calculated by the phase compensation amount calculator 7. Assuming that the resulting signal of the range compensation of the k-th sample is denoted as $z'_k$, a resulting signal of the phase compensation $z''_k$ can be obtained by the following Formula (44).

$$z''_k = z'_k \exp\{-j\Delta\theta''_k\} \qquad (4\ 4)$$

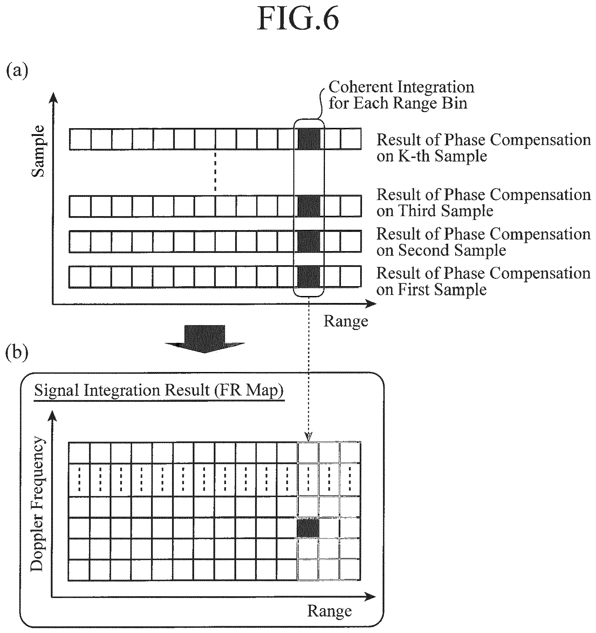

Next, the signal integrator 9 of the radar device performs coherent integration on resulting signals of motion compensation performed by the motion compensator 8 (i.e., resulting signals of the phase compensation) and thereby generates the FR map (step ST104). Hereinafter, processing of the signal integrator 9 will be described with FIG. 6.

The signal integrator 9 performs FFT for each range bin on the resulting signals of the phase compensation calculated by the motion compensator 8. FIG. 6 illustrates an example where signals of the same range bin in the first sample to the K-th sample are aligned in the order of sampling to perform FFT. Since a sampling direction is the same as a time direction, each FFT result indicates a one-dimensional array along a direction of Doppler frequency discretized by the Doppler frequency resolution of the sensor 1. By aligning the FFT results by all range bins, the FR map which has axes of Doppler frequency and range is obtained. A position where an integrated value in the FR map is the largest indicates the Doppler frequency and the range of the target. Note that the motion compensator 8 performs compensation such that a position of the target is aligned to the initial position in each sampling. Therefore, the Doppler frequency and range obtained from the FR map indicate values at the initial position of the target.

The target detector 10 of the radar device detects a position of the target from the FR map calculated by the signal integrator 9 (step ST105). That is, the target detector 10 detects a Doppler frequency bin and a range bin with the largest values in the FR map from the signal integrator 9 and obtains a corresponding Doppler frequency and range.

The hypothesis tester 11 of the radar device calculates a position (range and Doppler frequency of the target) of the target on a basis of the motion hypothesis generated by the motion hypothesis generator 4. The hypothesis tester 11 tests the motion hypothesis by compare the calculated position with the position of the target detected by the target detector 10 (step ST106). Hereinafter, processing of the hypothesis tester 11 will be described.

By specifying a motion model (i.e., a motion state amount) of the target in the three-dimensional space of rectangular coordinates, it is capable of calculating a peak position on the FR map. If the motion hypothesis matches with actual motion of the target, a calculated peak position matches with the position of the target.

Therefore, the hypothesis tester 11 calculates the position of the target on the FR map on a basis of the motion hypothesis and compares with the actually obtained position of the target obtained from the FR map.

The peak position on the FR map represents a range from the sensor 1 to the target and a Doppler frequency of the target at the initial position of the target (i.e., the start of observation of the target).

When an integration result according to an m-th motion hypothesis is obtained, the hypothesis tester 11 calculates a calculated value of range $R_{cal}$ by the following Formula (45).

$$R_{cal} = \left\| \mathbf{p}_1 \cdot \mathbf{p}_1^T \right\| \qquad (4\ 5)$$

Note that $P_1$ is defined by the following Formula (46).

$$\mathbf{p}_1 = \begin{bmatrix} x_{m,1} - x_{s,1} & y_{m,1} - y_{s,1} & z_{m,1} - z_{s,1} \end{bmatrix}^T \qquad (4\ 6)$$

In the Formula (46), $(x_{m,1}, y_{m,1}, z_{m,1})$ denotes the position of the target according to the m-th motion hypothesis, and $(x_{s,1}, y_{s,1}, z_{s,1})$ denotes the position of the sensor 1 at a time point of the start of observation.

The hypothesis tester 11 calculates a calculated value of Doppler frequency $f_{cal}$ from the following Formula (47). In the Formula (47), $\lambda$ denotes a transmission wavelength of the sensor 1.

$$f_{cal} = -\frac{2}{\lambda} \cdot \frac{\mathbf{p}_1 \cdot \mathbf{v}_1^T}{R_{cal}} \qquad (4\ 7)$$

Note that $v_1$ is defined by the following Formula (48).

$$\mathbf{v}_1 = \begin{bmatrix} \dot{x}_{m,1} - \dot{x}_{s,1} & \dot{y}_{m,1} - \dot{y}_{s,1} & \dot{z}_{m,1} - \dot{z}_{s,1} \end{bmatrix}^T \qquad (48)$$

In the Formula (48), (x dot $_{m,1}$, y dot $_{m,1}$, z dot $_{m,1}$) denotes velocity of the target according to the m-th motion hypothesis, and (x dot $_{s,1}$, y dot $_{s,1}$, z dot $_{s,1}$) denotes velocity of the sensor 1 at a time point of the start of observation.
The number of range bins $B_{cal,R}$ corresponding to the calculated range and the number of Doppler frequency bins $B_{cal,f}$ are obtained from the following Formulas (49) and (50). In the Formulas (49) and (50), ΔR denotes range resolution of the sensor 1, Δf denotes frequency resolution, and PRF denotes a pulse repetition frequency. Further, mod ($f_{cal}$, PRF) denotes a remainder from Doppler frequency $f_{cal}$ divided by the PRF. This is because the Doppler frequency turns back at the PRF as an upper limit.

$$B_{cal,R} = ceil\left\{\frac{R_{cal}}{\Delta R}\right\} \qquad (49)$$

$$B_{cal,f} = ceil\left\{\frac{mod(f_{cal}, PRF)}{\Delta f}\right\} \qquad (50)$$

Subsequently, the hypothesis tester 11 performs hypothesis testing through the following Formulas (51) and (52). In the Formulas (51) and (52), $B_R$ denotes the number of range bin of the position of the target according to the target detector 10 and $B_f$ denotes the number of Doppler frequency bin of the position of the target according to the target detector 10. Also in the Formula (51), $\sigma_R$ denotes a range observation accuracy (a standard deviation of range observation errors) of the sensor 1. Furthermore in the Formula (52), $\sigma_f$ denotes a Doppler observation accuracy (a standard deviation of Doppler observation errors) of the sensor 1. A value α is a parameter to which an appropriate value is set in advance.

$$\left|B_R - B_{cal,R}\right| > ceil\left(\frac{\alpha \times \sigma_R}{\Delta R}\right) \qquad (51)$$

$$\left|B_f - B_{cal,f}\right| > ceil\left(\frac{\alpha \times \sigma_f}{\Delta f}\right) \qquad (52)$$

When any of the Formulas (51) and (52) is satisfied, the hypothesis tester 11 determines that the detected position obtained by the integration result is different from the detected position obtained by calculation and thus an incorrect integration result is obtained. In this case, the motion hypothesis corresponding to the integration result is rejected. On the other hand, when neither the Formula (51) nor the Formula (52) is satisfied, the motion hypothesis is employed.
More specifically, a motion hypothesis is rejected when a difference between a range bin obtained from an integration result and a range bin obtained from calculation exceeds the number of bins corresponding to a value obtained by multiplying a range observation accuracy α. Similar to the range bin, a motion hypothesis is rejected when a difference between a Doppler frequency bin obtained from an integration result and a Doppler frequency bin obtained from calculation exceeds the number of cells corresponding to a value obtained by multiplying a Doppler observation accuracy by α.
The best hypothesis updater 12 of the radar device determines the motion hypothesis, as the best hypothesis, which has the largest integrated value from among the motion hypotheses being not rejected by the hypothesis tester 11 (step ST107). That is, the best hypothesis updater 12 compares the m-th motion hypothesis (hereinafter assumed as the latest hypothesis) and the best hypothesis currently retained from the detection result of the target detector 10 (a maximum value on the FR map and position of the target) and the hypothesis testing result of the hypothesis tester 11 and thereby updates the best hypothesis. Hereinafter, processing procedures of the best hypothesis updater 12 will be described.
When a motion hypothesis is rejected by the hypothesis tester 11, the best hypothesis updater 12 keeps the best hypothesis having been retained.

On the other hand, when a motion hypothesis is employed by the hypothesis tester 11, the best hypothesis updater 12 compares an integrated value of the best hypothesis and an integrated value of the latest hypothesis.

When, in the comparison of the integrated values, the integrated value of the latest hypothesis exceeds the integrated value of the best hypothesis, the best hypothesis updater 12 discards the best hypothesis currently retained along with the integrated value and the position of the target on the FR map of this best hypothesis. Thereafter, the latest hypothesis is set as the best hypothesis, and the latest hypothesis along with the integrated value and the position of the target on the FR map are newly retained.

On the other hand, when the integrated value of the latest hypothesis is equal to or less than the integrated value of the best hypothesis, the best hypothesis updater 12 keeps the best hypothesis without updating.

The target position outputter 13 of the radar device externally outputs the position of the target on the FR map of the best hypothesis finally retained in the best hypothesis updater 12 by displaying on a display, outputting to a file, or the like (step ST108).

The information indicating the best hypothesis retained in the best hypothesis updater 12 is notified to the motion hypothesis generator 4. The motion hypothesis generator 4 generates motion hypotheses on a basis of the notified best hypothesis. This is capable of enhancing a motion estimation accuracy and signal integration gain.

According to the Embodiment 1 described above, a motion model of a target is defined in a three-dimensional space of rectangular coordinates, and motion compensation is performed by calculating a motion state in a range direction from a motion state of the target estimated on the three-dimensional space of rectangular coordinates. This is capable of performing motion compensation suitable for actual motion of the target along with effects of mitigating an integration loss upon signal integration over a long time and enhancing detection performance of the target.

Furthermore, since the motion model of the target is specified in the three-dimensional space of rectangular coordinates, a motion hypothesis is also specified in the three-dimensional space of rectangular coordinates. This is capable of obtaining a position of the target (range and Doppler frequency) through calculation separately from actual integration processing, thereby allowing for determining an incorrect motion hypothesis when there is a shift between the position of the target obtained by calculation and the position of the target obtained by integration processing. Therefore, it is capable of rejecting an incorrect motion hypothesis with a large integrated value with an effect of enhancing detection performance of the target.

Embodiment 2

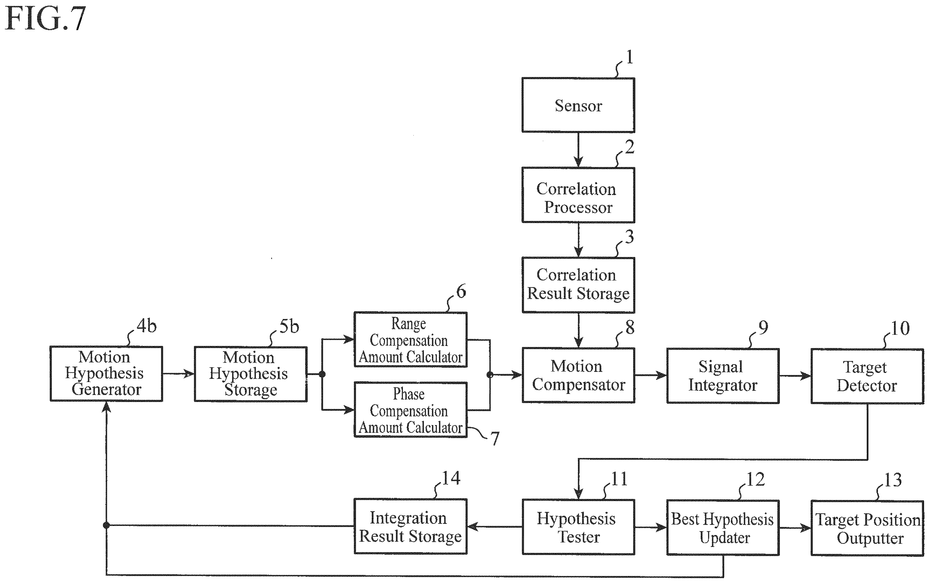

FIG. 7 is a diagram illustrating a configuration of a radar device according to Embodiment 2 of the invention. The radar device according to the Embodiment 2 illustrated in FIG. 7 includes a motion hypothesis generator 4b and a motion hypothesis storage 5b, which are modified from the motion hypothesis generator 4 and motion hypothesis storage 5 of the radar device according to the Embodiment 1 of FIG. 1, and further includes an integration result storage 14. Other configurations are similar to those of the Embodiment 1 and thus denoted with the same symbols while only different points will be described.

The integration result storage 14 stores integration results (FR maps) of the signal integrator 9, which are obtained from all motion hypotheses stored in the motion hypothesis storage 5b, and also stores determination results of the hypothesis tester 11. The integration result storage 14 is configured by an HDD, a DVD, a memory, or the like.

The motion hypothesis generator 4b generates a plurality of motion hypotheses of a target based on a motion model of the target in a defined three-dimensional space of rectangular coordinates, which is similar to the motion hypothesis generator 4 of the Embodiment 1. The motion hypothesis generator 4b differs from the Embodiment 1 in that, it does not generate all motion hypotheses at one time. Instead, the motion hypothesis generator 4b generates a plurality of new motion hypotheses while narrowing down a generation scope on a basis of the integration results stored in the integration result storage 14. The motion hypothesis generator 4b of the Embodiment 2 has a search technique by means of random sampling represented by a particle filter or the like, and generates a new motion hypothesis while effectively narrowing down a generation scope of motion hypotheses. This motion hypothesis generator 4b is executed by program processing using a CPU on a basis of software.

The motion hypothesis storage 5b discards a motion hypothesis having been retained, and stores a new motion hypothesis every time when the new motion hypothesis is generated by the motion hypothesis generator 4b. The motion hypothesis storage 5b is configured by an HDD, a DVD, a memory, or the like.

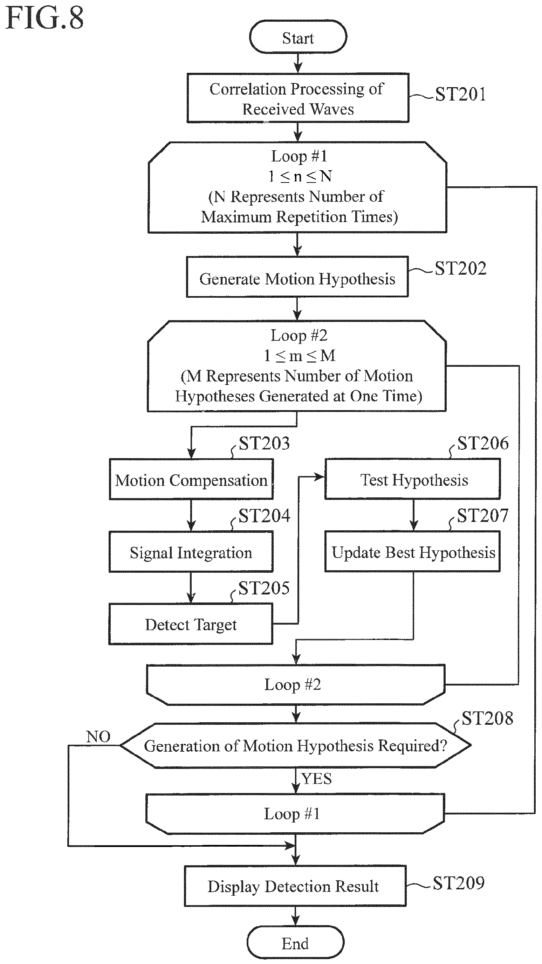

Next, operations of the radar device of the Embodiment 2 will be described with FIG. 8.

In the operations of the radar device according to the Embodiment 2, as illustrated in FIG. 8, correlation processing on received waves is first performed (step ST201). This processing in step ST201 is similar to that in step ST101 of the Embodiment 1 and thus the details thereof are omitted.

The radar device generates, as a motion hypothesis, a motion state amount of the target at the start of observation (step ST202). For this process, the motion hypothesis generator 4b first generates a certain number of motion hypotheses up to N times. The value N can be set to an appropriate value depending on actual operation to finish all processing within a practical time.

Initial motion hypotheses generated by the motion hypothesis generator 4b are referred to as an initial motion hypothesis group. The motion hypothesis generator 4b generates, as the initial motion hypothesis group, M groups of motion hypotheses within a generation scope of motion hypotheses. The value M is a parameter and can be set to an appropriate value for example by performing simulation on a computer in advance.

When an assumed motion model of the target represents motion with constant acceleration, a motion hypothesis can be defined by the Formula (6) shown in the Embodiment 1. A generation scope of motion hypotheses with respect to a position $x_{m,1}$, $y_{m,1}$, $z_{m,1}$ ranges from x_max to x_min, from y_max to y_min, and from z_max to z_min. Also, the generation range with respect to velocity x dot $_{m,1}$, y dot $_{m,1}$, z dot $_{m,1}$ ranges from vx_max to vx_min, from vy_max to vy_min, and from vz_max to vz_min. Furthermore, the generation range with respect to acceleration x double dots $_{m,1}$, y double dots $_{m,1}$, z double dots $_{m,1}$ ranges from ax_max to ax_min, from ay_max to ay_min, and from az_max to az_min.

When a motion hypothesis group is generated by the motion hypothesis generator 4b for a second and subsequent times, an n-th motion hypothesis group is generated based on all integration results of a motion hypothesis group generated for an (n-1)-th time ($1 \leq n \leq N$) and stored in the integration result storage 14. Hereinafter, generation procedures of the n-th motion hypothesis group will be described.

The motion hypothesis generator 4b acquires integration results (FR maps) of all motion hypotheses included in the motion hypothesis group, which have been generated by the motion hypothesis generator 4b for the (n-1)-th time and have been stored in the integration result storage 14. The motion hypothesis generator 4b calculates SNRs of the integration results of the respective motion hypotheses from the FR maps of the respective motion hypotheses.

It is assumed that the SNR of an m-th ($1 \leq m \leq M$) motion hypothesis of the motion hypothesis group generated for the n-1 time is denoted as $SNR_{n-1,m}$, a maximum value of the FR map obtained from the m-th motion hypothesis of the motion hypothesis group generated for the n-1 time is denoted as $Fmax_{n-1,m}$, an average of the rest of the values excluding the maximum value of the FR map is denoted as $BGmean_{n-1,m}$, and a standard deviation of the rest of the values excluding the maximum value of the FR map is denoted as $BGstd_{n-1,m}$. In this case, $SNR_{n-1,m}$ can be obtained from the following Formula (53).

$$SNR_{n-1,m} = \frac{Fmax_{n-1,m} - BGmean_{n-1,m}}{BGstd_{n-1,m}} \qquad (53)$$

Subsequently, a ratio $W_{n-1,m}$ is obtained, which indicates a ratio of an SNR of the m-th motion hypothesis of the motion hypothesis group generated for the (n-1)-th time to the sum of SNRs of all the motion hypotheses in the motion hypothesis group generated for the (n-1)-th time. After that, this ratio is set as a probability of selecting the m-th motion hypothesis generated for the (n-1)-th time.

Next, a single motion hypothesis is selected from among M motion hypotheses generated for the (n-1)-th time in accordance with the selection probability $W_{n-1,m}$, and a new motion hypothesis is generated in a random manner in the proximity of the selected motion hypothesis. This selection of a motion hypothesis is repeated for M times by sampling with replacement and M new motion hypotheses are generated. When there is a motion hypothesis rejected by the hypothesis tester 11, this motion hypothesis is excluded from selection objects. The M hypotheses generated in this manner are set as an n-th hypothesis group.

This is capable of generating more n-th motion hypotheses in the proximity of the motion hypothesis having a large integrated value from among the motion hypothesis group generated for the (n-1)-th time and also having a high possibility of being the initial motion state amount of the target.

The motion hypothesis storage 5b discards all the motion hypotheses of the (n-1)-th time having been stored therein and stores all new motion hypotheses generated by the motion hypothesis generator 4b.

After that, the radar device repeats executing processing of steps ST203 to ST207 on M motion hypotheses stored in the motion hypothesis storage 5b. The processing in steps ST203 to ST207 is similar to that in steps ST103 to ST107 of the Embodiment 1 and thus details thereof are omitted. Note that the integration result storage 14 of the radar device stores integration results (FR maps) of the signal integrator 9 performed on all motion hypotheses stored in the motion hypothesis storage 5b and also stores hypothesis testing results of the hypothesis tester 11.

When processing of steps ST203 to ST207 is executed on all the motion hypotheses for the n-th time, the sequence proceeds to step ST208.

Next, the motion hypothesis generator 4b determines whether or not to generate motion hypotheses for an (n+1)-th time (step ST208). Hereinafter, processing of the motion hypothesis generator 4b in step ST208 will be described.

When the same motion hypothesis is selected as the best hypothesis for T consecutive times, the motion hypothesis generator 4b decides that generation of motion hypotheses for the (n+1)-th time is not necessary. Otherwise, it is decided that generation of motion hypotheses for the (n+1)-th time is necessary. The value T is a parameter, which can be set to an appropriate value by performing simulation on a computer in advance.

Also, when each of the motion hypotheses generated for the n-th time is included in the proximity of another motion hypothesis and the same motion hypothesis is selected as the best hypothesis for T consecutive times, the motion hypothesis generator 4b decides that generation of motion hypotheses for the (n+1)-th time is not necessary. Otherwise, the motion hypothesis generator 4b may decide that generation of motion hypotheses for the (n+1)-th time is necessary.

When the motion hypothesis generator 4b determines that generation of motion hypotheses for the (n+1)-th time is not necessary, or when the value n reaches N in this step ST208, generation of a new motion hypothesis is terminated and the sequence proceeds to step ST209. This processing in step ST209 is similar to that in step ST108 of the Embodiment 1 and thus details thereof are omitted.

According to the Embodiment 2, the motion compensation and the signal integration are not performed on all combinations in the scopes that motion hypotheses may cover, but instead generation of motion hypotheses by random sampling and integration of the respective motion hypotheses are repeatedly executed, effectively searching for a motion hypothesis having the largest integrated value. This results in effectively narrowing down the number of motion hypotheses being integration objects and thereby reducing calculation burden in addition to the effects of the Embodiment 1.

Furthermore, performing hypothesis testing on the integration results and rejecting incorrect motion hypotheses prevents generation of a new motion hypothesis in the proximity of the incorrect motion hypothesis, thereby enhancing detection performance of the target.

Embodiment 3

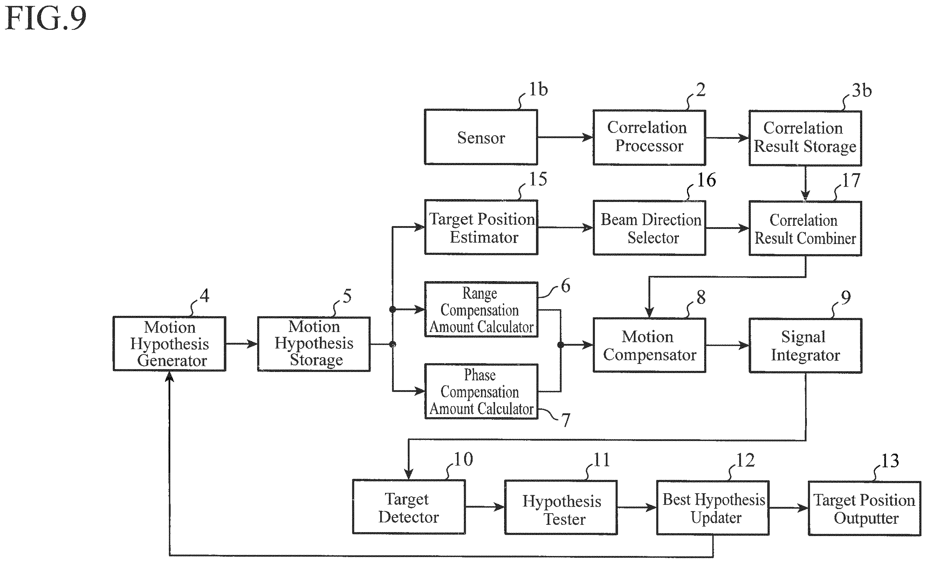

FIG. 9 is a diagram illustrating a configuration of a radar device according to Embodiment 3 of the invention. The radar device according to the Embodiment 3 illustrated in FIG. 9 includes a sensor 1b and a correlation result storage 3b, which are modified from the sensor 1 and correlation result storage 3 of the radar device according to the Embodiment 1 illustrated in FIG. 1. Further, a target position estimator 15, a beam direction selector 16, and a correlation result combiner 17 are introduced. Other configurations are similar and thus denoted with the same symbols while only different points will be described.

The sensor 1b externally transmits electromagnetic waves as transmission waves and receives, as received waves, reflection waves of the transmission waves reflected from a target that is an observation object, which are the same as the sensor 1 of the Embodiment 1. The sensor 1b differs from the Embodiment 1 in the point that the sensor 1b sequentially observes a wide observation coverage substantially at the same observation timing and the same sampling intervals (that is, at the same sampling time) while switching beam directions of the transmission waves for example like a search radar.

The correlation result storage 3b stores resulting signals of the correlation processing of the correlation processor 2 while associating these resulting signals of the correlation processing with corresponding sampling times (sample numbers) and corresponding beam directions (elevation angle number and azimuth angle number of the beam). The correlation result storage 3b is configured by an HDD, a DVD, a memory, or the like.

The target position estimator 15 estimates a position of the target at the respective sampling times by using the motion hypotheses stored in the motion hypothesis storage 5.

The beam direction selector 16 selects a beam direction covering the position of the target estimated by the target position estimator 15 in an observation coverage.

The correlation result combiner 17 acquires, from among the resulting signals of the correlation processing stored in the correlation result storage 3b, signals having the same beam direction as one selected by the beam direction selector 16 for each sampling time, and combines the acquired signals of all sampling times. This results in observation signals (combined signals) of a series of observation in appearance.

The target position estimator 15, the beam direction selector 16, and the correlation result combiner 17 are implemented by program processing using a CPU based on software.

The motion compensator 8 performs motion compensation on the combined signals of the correlation result combiner 17 by using calculation results of the range compensation amount calculator 6 and phase compensation amount calculator 7.

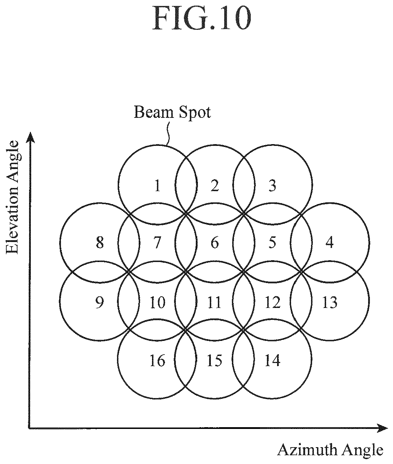

Next, operations of search radar will be described with FIG. 10.

The search radar observes a wide coverage, which cannot be observed at a time, by sequentially switching beam directions. In FIG. 10, a circle having a numeral in the center represents an observation coverage (a beam spot) for a single beam, where the numeral represents an order of observation. That is, a beam is emitted to each observation direction in the order of # 1, 2, 3, ... , 16. Since the switching of beam directions is performed at a high speed, it can be assumed as simultaneous observation of the search coverage using a plurality of beams having different directions.

With such a search radar, a target is detected by signal integration. Since the target moves within the search coverage, a beam direction where the target can be observed may vary depending on time. Therefore, it is desirable to perform integration by effectively extracting received signals where the target is observed from among observation signals having various beam directions.

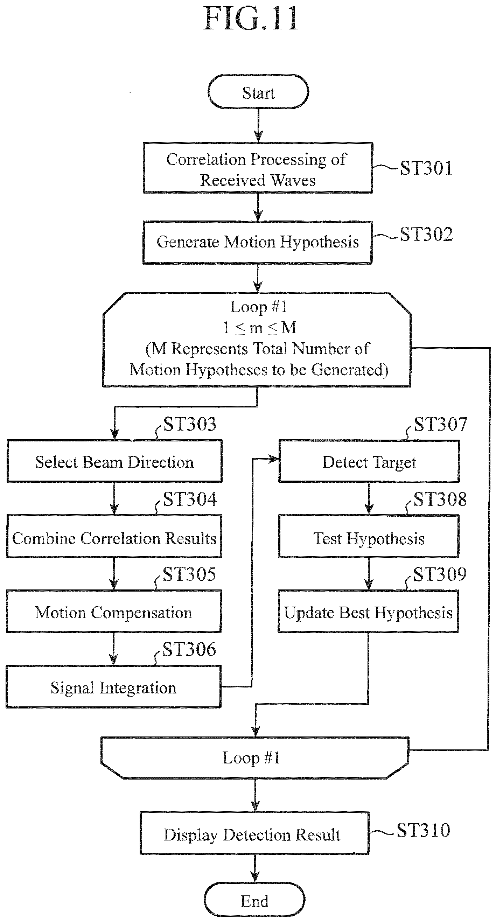

Next, operations of the radar device according to the Embodiment 3 will be described with referring to FIG. 11.

In the operations of the radar device according to the Embodiment 3, as illustrated in FIG. 11, correlation processing on received waves is performed (step ST301). That is, the sensor 1b emits beams in a plurality of predetermined beam directions. Although the beams are sequentially emitted in the respective directions, the beam switching is performed at a high speed. Therefore, it can be assumed as simultaneous emission of the plurality of beams. A sampling interval and the number of times of sampling are the same for each beam direction. The sensor 1b receives, as received waves, reflection waves of the emitted beam, which is reflected from the target being an observation object.

The correlation processor 2 performs correlation processing on the received signals of the sensor 1b. This processing of the correlation processor 2 is similar to that of the Embodiment 1 and thus details thereof are omitted.

The correlation result storage 3b stores the resulting signals of the correlation processing of the correlation processor 2 while adding thereto corresponding sampling times (sample numbers) and beam directions (elevation angle number and azimuth angle number of the beam).

Here, an elevation angle number and azimuth angle number is explained with referring to an example of FIG. 10. In FIG. 10, the number of beams in the elevation angle direction is four while the number of beams in the azimuth angle direction is five. Accordingly, the elevation angle numbers are 1 to 4 while an azimuth angle numbers are 1 to 5. For example, the ninth beam with the numeral "9" has an elevation angle number of 2 and an azimuth angle number of 1.

The radar device generates a motion state amount of the target at the start of observation as a motion hypothesis (step ST302). This processing in step ST302 is similar to that in step ST102 of the Embodiment 1 and thus details thereof are omitted.

After that, the radar device repeats executing processing of steps ST303 to ST309 on M motion hypotheses stored in the motion hypothesis storage 5. Hereinafter, processing on an m-th motion hypothesis stored in the motion hypothesis storage 5 will be described. Here, motion of the target is assumed as motion with constant acceleration and a value $H_m$ is expressed by the Formula (6) defined in the Embodiment 1. Also, a motion state amount and a motion model of the target are expressed by the Formulas (1) and (2), respectively, defined in the Embodiment 1.

The radar device first calculates a beam number which is estimated to be capable of observing the target at each sampling time (step ST303). That is, the target position estimator 15 estimates a position of the target of the k-th sample through the Formula (2) by applying the motion hypothesis $H_m$ of the Formula (6) as an initial motion state amount of the target. The beam direction selector 16 selects a beam direction, which is estimated to be capable of observing the target in the k-th sample, from the position of the target estimated by the target position estimator 15.

When a position of the sensor 1b is taken as the origin, a position of the target in the k-th sample is denoted as $(x_k, y_k, z_k)$ with resolution in the elevation angle direction (that is a width of one beam in the elevation angle) denoted as $\Delta E1$ and resolution in the azimuth angle direction denoted as $\Delta Az$. In this case, an elevation angle number of the beam direction where the target can be observed in the k-th sample can be obtained from the following Formula (54) while an azimuth angle number thereof can be obtained from the following Formula (55).

$$El\_no_k = ceil\left\{\frac{\tan^{-1}\left(z_k / \sqrt{x_k^2 + y_k^2}\right)}{\Delta El}\right\} \qquad (5\ 4)$$

$$Az\_no_k = ceil\left\{\frac{\tan^{-1}\left(x_k / y_k\right)}{\Delta Az}\right\} \qquad (5\ 5)$$

Next, the correlation result combiner 17 acquires, from the correlation result storage 3b, resulting signals of correlation processing of a beam, which is estimated to be capable of observing the target, from among the respective samplings of k= 1 to K and thereby generates the combined signals (step ST304). That is, the correlation result combiner 17 refers to an elevation angle number $El\_no_k$ and an azimuth angle number $Az\_no_k$ selected by the beam direction selector 16. The correlation result combiner 17 acquires a resulting signal of the correlation processing of the k-th sample stored in the correlation result storage 3b, where an elevation angle number thereof matches with $El\_no_k$ and an azimuth angle number matches with $Az\_no_k$. Thereafter, similar processing is repeated from k= 1 to K. The acquired resulting signals of the correlation processing of the respective samplings are combined to obtain combined signals.

Other processing in steps ST305 to ST309 and step ST310 is similar to that in steps ST103 to ST107 and step ST108 of the Embodiment 1, with the exception that an object of motion compensation is not the resulting signals of the correlation processing but the combined signals and thus details thereof are omitted.

According to the Embodiment 3, the radar device to perform observation with a plurality of beam spots substantially at the same timing like a search radar where a motion model of a target is defined in a three-dimensional space of rectangular coordinates estimates a position of the target at each sampling time from the defined motion model, extracts signals of a beam which is estimated to have observed the target for each sampling time, and combines those signals to obtain observation signals of a series of observations in appearance. This is capable of performing motion compensation suitable for actual motion of the target even with a target moving among the plurality of beam spots with effects of mitigating an integration loss upon signal integration over a long time and enhancing detection performance of the target.

In FIG. 9, a case based on the configuration of the Embodiment 1 has been described. Alternatively, in the configuration of the Embodiment 2 illustrated in FIG. 7, the sensor 1 and the correlation result storage 3 may be replaced with the sensor 1b and the correlation result storage 3b and the target position estimator 15, the beam direction selector 16, and the correlation result combiner 17 may be added, where similar effects can be obtained.

Embodiment 4

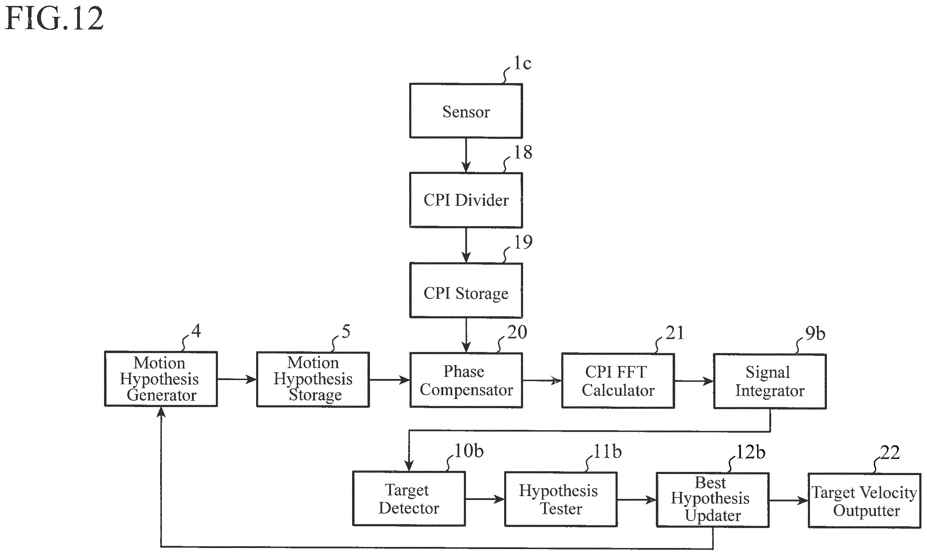

FIG. 12 is a diagram illustrating a configuration of a radar device according to Embodiment 4 of the invention.

The radar device according to the Embodiment 4 includes, as illustrated in FIG. 12, a sensor 1c, a CPI divider 18, a CPI storage 19, a motion hypothesis generator 4, a motion hypothesis storage 5, a phase compensator 20, a CPI FFT calculator 21, a signal integrator 9b, a target detector 10b, a hypothesis tester 11b, a best hypothesis updater (a motion hypothesis selector) 12b and a target velocity outputter 22. Of these, configurations of the motion hypothesis generator 4 and motion hypothesis storage 5 are the same as those of the Embodiment 1 and thus details thereof are omitted.

The sensor 1 c transmits transmission waves by using a high pulse repetition frequency (HPRF) pulsed Doppler radar. Also, the sensor 1c receives reflection waves of the transmission waves reflected from a target and converts the reflection waves into received signals, thereby observing the target.

The CPI divider 18 divides the received signals, which were converted into by the sensor 1c, into short-time blocks (i.e., Coherent Pulse Intervals (CPIs)) where velocity of motion of the target can be assumed as being equivalent.

The CPI storage 19 stores the received signals (CPI blocks) divided into CPI intervals by the CPI divider 18. The CPI storage 19 is configured by an HDD, a DVD, a memory, or the like.

The phase compensator 20 calculates a phase compensation amount for the CPI blocks stored in the CPI storage 19 on a basis of the motion hypothesis stored in the motion hypothesis storage 5 and the motion model, and thereby performs phase compensation on the CPI blocks.

The CPI FFT calculator 21 performs FFT on resulting CPI blocks of the phase compensation performed by the phase compensator 20.

The signal integrator 9b integrates amplitude values of the same Doppler frequency bins in the resulting CPI blocks of the FTT performed by the CPI FFT calculator 21.

The target detector 10b detects a Doppler frequency of the target from an integration result of the signal integrator 9b. During this process, the target detector 10b detects a Doppler frequency (a Doppler frequency bin) with a largest integrated value and set it as a Doppler frequency of the target.

The hypothesis tester 11b calculates a Doppler frequency of the target from the motion hypothesis stored in the motion hypothesis storage 5, and determines whether or not the motion hypothesis is correct by comparing the calculated Doppler frequency with the Doppler frequency of the target detected by the target detector 10b. When a difference between the Doppler frequency of the target obtained from the integration result and one obtained from the motion hypothesis used in the integration exceeds a certain interval (i.e., exceeds the number of Doppler frequency bins corresponding to a constant multiple of a Doppler observation accuracy of the sensor 1c), the hypothesis tester 11b decides that the motion hypothesis is incorrect and rejects the motion hypothesis

The best hypothesis updater 12b obtains the best motion hypothesis based on the integration result of the signal integrator 9b from among the motion hypotheses being not rejected (i.e., being determined as correct) by the hypothesis tester 11b. The best hypothesis updater 12b determines, as the best hypothesis, the motion hypothesis having the largest integrated value from among the motion hypotheses. The best hypothesis updater 12b retains the best hypothesis, and an integration result and a Doppler frequency of the target obtained by using this best hypothesis.

The target velocity outputter 22 calculates Doppler velocity from the Doppler frequency of the target according to the best hypothesis ultimately retained in the best hypothesis updater 12b, and externally outputs the Doppler velocity by displaying on a display, outputting to a file, or the like.

The CPI divider 18, the phase compensator 20, the CPI FFT calculator 21, the signal integrator 9b, the target detector 10b, the hypothesis tester 11b, the best hypothesis updater 12b, and the target velocity outputter 22 are implemented by program processing using a CPU based on software.

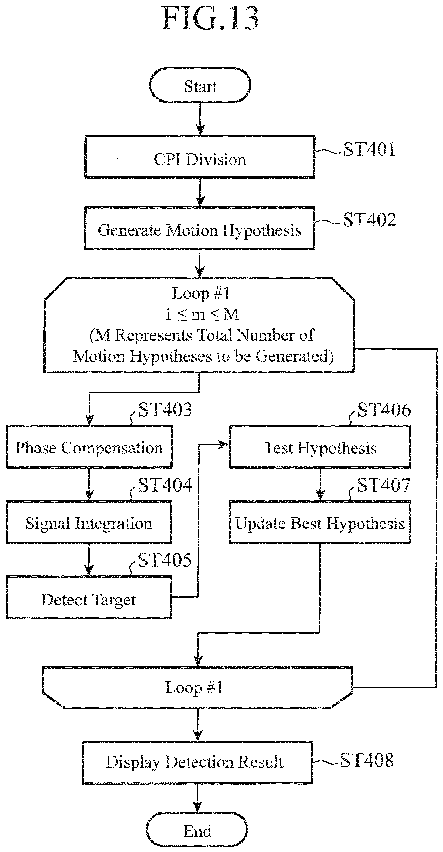

Next, operations of the radar device of the Embodiment 4 will be described with FIG. 13.

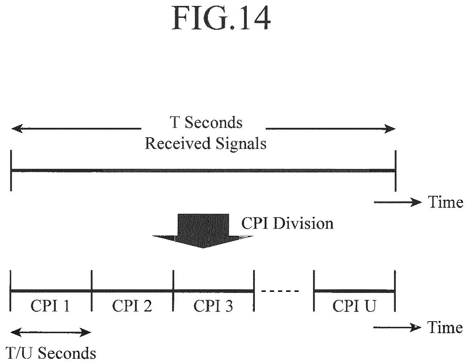

In the operations of the radar device according to the Embodiment 4, as illustrated in FIG. 13, CPI division of received signals is first performed (step ST401). That is, the sensor 1c first observes the target by using the HPRF pulsed Doppler radar. The CPI divider 18 divides the signals (i.e., received signals) indicating observation result of the sensor 1c at CPI intervals. FIG. 14 illustrates exemplary CPI division. In FIG. 14, received signals for T seconds are divided into U CPIs. Therefore, one CPI interval equals T/U seconds. The CPI storage 19 stores the received signals (CPI blocks) divided into the aforementioned CPI intervals.

Next, the radar device generates, as a motion hypothesis, a motion state amount of the target at the start of observation (step ST402). This processing in step ST402 is similar to that in step ST102 of the Embodiment 1 and thus details thereof are omitted.

The phase compensator 20 of the radar device calculates a phase compensation amount for the CPI blocks stored in the CPI storage 19 on a basis of the motion hypothesis stored in the motion hypothesis storage 5 and the motion model, and thereby performs phase compensation (step ST403). Since the HPRF pulsed Doppler radar is not able to acquire range information, range compensation descried in each of the Embodiments 1 to 3 is not required and only phase compensation is performed.

The phase compensator 20 calculates the phase compensation amount and performs phase compensation. This calculation processing of the phase compensation amount is the same as the processing of the phase compensation amount calculator 7 of the Embodiment 1, and the phase compensation processing is the same as the phase compensation processing of the motion compensator 8 of the Embodiment 1 and thus details thereof are omitted.

Note that the phase compensator 20 is different from that of the Embodiment 1 in the point that an equation $\Delta t = T/U$ is defined, where observation time of the entire received signals is denoted as T seconds and the number of CPI blocks is denoted as U, and also the point that objects of phase compensation include the respective CPI blocks.

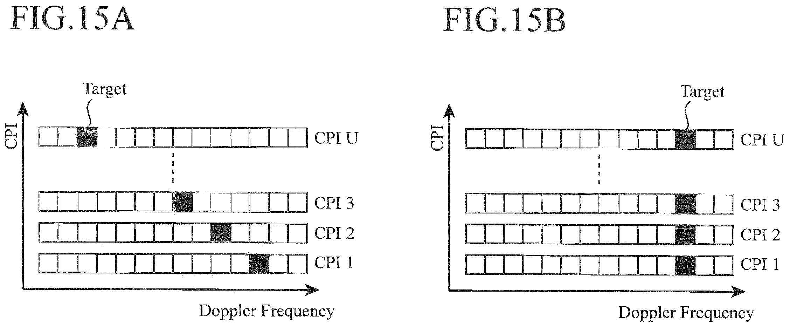

Subsequently, the radar device performs signal integration (step ST404). That is, the CPI FFT calculator 21 performs FFT on each CPI block on which the phase compensation have been performed by the phase compensator 20. FIG. 15A is schematic diagram illustrating a case of performing FFT without performing phase compensation.

FIG. 15B is schematic diagram illustrating a case of performing FFT after phase compensation. As illustrated in FIGS. 15A and 15B, the case not performing phase compensation results in different Doppler frequencies of the target in the respective CPI blocks, while the case performing phase compensation results in an equivalent Doppler frequency of the target in the respective CPI blocks. In this manner, by performing phase compensation, it is capable of aligning a position of the target after FFT.

Thereafter, the signal integrator 9b integrates amplitude values of the same Doppler frequency bins of the CPI blocks on which FFT have been performed by the CPI FFT calculator 21.

Here, an amplitude value of a $b_f$-th Doppler frequency bin of a u-th CPI block after FFT is denoted as $A(u, b_f)$ with the number of CPI blocks denoted as U. In this case, an integrated value $I(b_t)$ can be obtained from the following Formula (56). Integrated values are obtained for all the Doppler frequency bins from the Formula (56).

$$I(b_f) = \sum_{u=1}^{U} A(u, b_f) \quad (b_f = 1, \ldots, N_b) \qquad (5\ 6)$$

Note that $N_b$ denotes the number of Doppler frequency bins.

The target detector 10b of the radar device detects a Doppler frequency (a Doppler frequency bin) with a largest integrated value from the integration results of the signal integrator 9b, and sets the detected one as a Doppler frequency of the target (step ST405). The processing of the phase compensator 20 includes phase compensation for aligning at an initial velocity of the target. Therefore, the Doppler frequency and Doppler frequency bin of the target detected by the target detector 10b are values at an initial position.

The hypothesis tester 11b of the radar device calculates a Doppler frequency of the target based on the motion hypothesis generated by the motion hypothesis generator 4, and tests the motion hypothesis through comparison with the Doppler frequency of the target detected by the target detector 10b (step ST406). The Doppler frequency of the target detected by the target detector 10b is a value at an initial position. Therefore, the hypothesis tester 11b calculates a Doppler frequency of the target at the initial position from the motion hypothesis, and determines validity of the motion hypothesis through comparison between the Doppler frequency of the target output from the target detector 10b and the calculated Doppler frequency. Hereinafter, processing of the hypothesis tester 11b will be described.

The Procedure to calculate the Doppler frequency of the target from the motion hypothesis of the hypothesis tester 11b is similar to the processing of the hypothesis tester 11 of the Embodiment 1. That is, a Doppler frequency is calculated from the Formula (47) and a Doppler frequency bin is calculated from the Formula (50).

Furthermore, the determination on validity of the motion hypothesis is also similar to that by the hypothesis tester 11 of the Embodiment 1. That is, the motion hypothesis is rejected when a relation between the Doppler frequency bin of the target detected by the target detector 10b and the calculated Doppler frequency bin satisfies the Formula (52) and otherwise the motion hypothesis is employed.

Subsequently, the best hypothesis updater 12b of the radar device decides a motion hypothesis as the best hypothesis, which has the largest integrated value from among the motion hypotheses not rejected by the hypothesis tester 11b (step ST407). The best hypothesis updater 12b retains the motion hypothesis with the largest integrated value (decided as the best hypothesis) having been obtained from the integration processing, and also retains the Doppler frequency of the target and an integrated value thereof.

When a motion hypothesis is rejected by the hypothesis tester 11b, the best hypothesis updater 12b keeps the best hypothesis currently retained and the Doppler frequency and integrated value thereof of the target.

On the other hand, when a motion hypothesis is employed by the hypothesis tester 11b, the best hypothesis updater 12b compares an integrated value of the best hypothesis with an integrated value of the latest hypothesis.

In the comparison of the integrated values, when the integrated value of the latest hypothesis exceeds the integrated value of the best hypothesis, the best hypothesis updater 12b discards the best hypothesis currently retained and the integrated value and Doppler frequency of the target of the best hypothesis. Thereafter, the latest hypothesis is set as the best hypothesis, and the latest hypothesis is retained together with the integrated value and the Doppler frequency of the target.

On the other hand, when the integrated value of the latest hypothesis is equal to or less than the integrated value of the best hypothesis in the comparison of the integrated values, the best hypothesis updater 12b keeps the currently retained best hypothesis together with the integrated value and the Doppler frequency of the target.

The aforementioned processing of steps ST403 to ST407 is repeatedly implemented until performing on all the motion hypotheses.

Subsequently, the target velocity outputter 22 of the radar device calculates Doppler velocity from the Doppler frequency of the target according to the best hypothesis ultimately retained in the best hypothesis updater 12b, and outputs the Doppler velocity by displaying on a display, outputting to a file, or the like (step ST408). When a Doppler frequency of the target is denoted by $f_{dop}$ and a transmission wavelength is denoted by $\lambda$, Doppler velocity $v_{dop}$ is obtained from the following Formula (57).

$$v_{dop} = -\frac{\lambda}{2} f_{dop} \qquad (5\ 7)$$

Note that $\lambda$ denotes a transmission wavelength while $f_{dop}$ denotes a Doppler frequency of the target.

According to the Embodiment 4, the radar device which can obtain only Doppler frequency information of the target, such as the HPRF pulsed Doppler radar, is configured to define a motion model of the target in the three-dimensional space of rectangular coordinates to estimate a motion state amount of the target. This is capable of estimating a motion state amount suitable for actual motion of the target. This results in effects of enhancing an estimation accuracy of a position of the target in the respective CPI blocks, mitigating an integration loss upon signal integration over a long time, and enhancing detection performance of the target.

Moreover, similarly to the radar device of the Embodiment 1, generating a motion hypothesis in the three-dimensional space of rectangular coordinates is capable of testing the motion hypothesis. This is capable of rejecting an incorrect hypothesis with a large integrated value with an effect of enhancing detection performance of the target.

In the configuration illustrated in FIG. 12, alternatively, the motion hypothesis generator 4 and the motion hypothesis storage 5 can be replaced with the motion hypothesis generator 4b and the motion hypothesis storage 5b, and the integration result storage 14 can be added, as in the Embodiment 2.

Embodiment 5

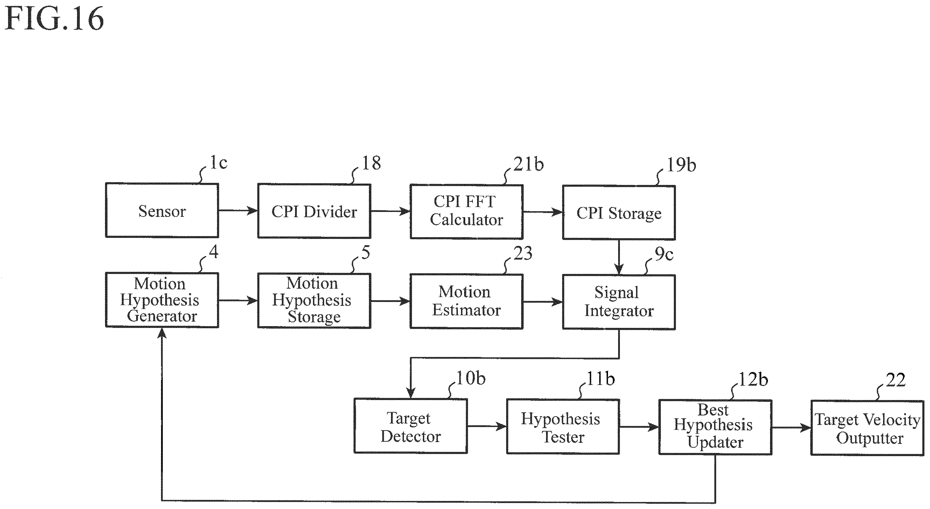

FIG. 16 is a diagram illustrating a configuration of a radar device according to Embodiment 5 of the invention. The radar device according to the Embodiment 5 illustrated in FIG. 16 includes the radar device according to the Embodiment 4 illustrated in FIG. 12 where the phase compensator 20 is excluded, the signal integrator 9b, the CPI storage 19, and the CPI FFT calculator 21 are replaced with a signal integrator 9c, a CPI storage 19b, and a CPI FFT calculator 21b, and a motion estimator 23 is added. Other configurations are similar and thus denoted with the same symbols while only different points will be described.

The CPI FFT calculator 21b performs FFT on the received signals (CPI blocks) divided into CPI intervals by the CPI divider 18.

The CPI storage 19b stores the resulting CPI blocks of the FFT by the CPI FFT calculator 21b. The CPI storage 19b is configured by an HDD, a DVD, a memory, or the like.

The motion estimator 23 estimates a motion state amount (a position of the target) of the target in a three-dimensional space of rectangular coordinates at time corresponding to each of the CPI blocks based on a motion hypothesis stored in the motion hypothesis storage 5 and calculates a Doppler frequency bin of the target in each of the CPI blocks from the estimation result.

The signal integrator 9c performs incoherent integration between the CPI blocks on the resulting CPI blocks of the FFT stored in the CPI storage 19b on a basis of the Doppler frequency bin of the target calculated by the motion estimator 23. This is capable of aligning positions of the target in the respective CPI blocks at the same Doppler frequency bin for performing signal integration.

The CPI FFT calculator 21b, motion estimator 23, and signal integrator 9c are executed by program processing using a CPU based on software.

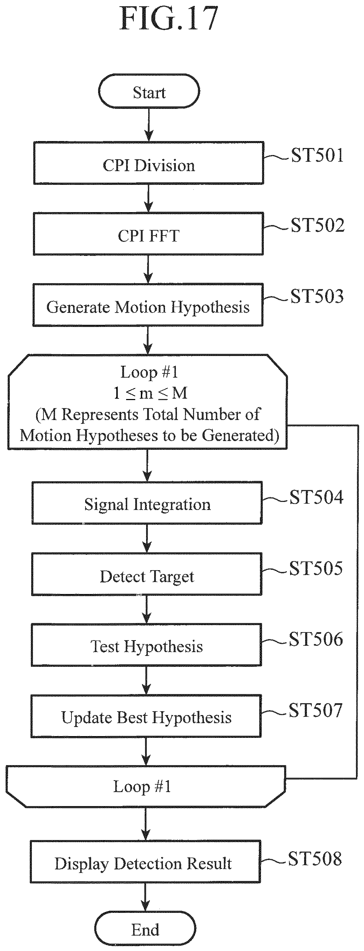

Next, operations of the radar device of the Embodiment 5 will be described with FIG. 17.

In the operations of the radar device according to the Embodiment 5, as illustrated in FIG. 17, CPI division of received signals is performed (step ST501). This processing in step ST501 is similar to that in step ST401 of the Embodiment 4 and thus details thereof are omitted.

The radar device performs FFT on the respective CPI blocks divided into by the CPI divider 18 (step ST502). That is, the CPI FFT calculator 21b performs FFT processing on the respective CPI blocks coming from the CPI divider 18. After that, the CPI storage 19b stores the resulting CPI blocks of the FFT performed by the CPI FFT calculator 21b.

The radar device generates, as a motion hypothesis, a motion state amount of the target at the start of observation (step ST503). This processing in step ST503 is similar to that in step ST102 of the Embodiment 1 and thus details thereof are omitted.

The radar device then repeats executing processing of steps ST504 to ST507 on M motion hypotheses stored in the motion hypothesis storage 5.

First, the radar device performs integration between CPI blocks (step ST504). That is, the motion estimator 23 first estimates a motion state amount of the target in a three-dimensional space of rectangular coordinates at a time point corresponding to each of the CPI blocks based on a motion hypothesis stored in the motion hypothesis storage 5. The motion estimator 23 then calculates a Doppler frequency bin of the target in each of the CPI blocks from the estimated motion state amount. Hereinafter such procedures are described.

The motion estimator 23 sets respective values of a motion hypothesis for an initial motion state amount of the target. For example, when a motion model of the target is motion with constant acceleration according to an m-th motion hypothesis, an initial motion state amount of the target is provided by the following Formula (58).

$$\begin{cases} \mathbf{X}_1 = \begin{bmatrix} x_{m,1} & y_{m,1} & z_{m,1} & \dot{x}_{m,1} & \dot{y}_{m,1} & \dot{z}_{m,1} \end{bmatrix}^T \\ \mathbf{w} = \begin{bmatrix} \ddot{x}_m & \ddot{y}_m & \ddot{z}_m \end{bmatrix}^T \end{cases} \qquad (58)$$

Subsequently, in accordance with a predetermined motion model of the target, the motion estimator 23 obtains a motion state amount $X_k$ (k = 1,2,...,U) at time (k-1)$\Delta$t using the Formula (2) shown in the Embodiment 1. Assuming that the observation time of the entire received signals is denoted as T, and the number of CPI blocks is denoted as U, $\Delta$t=T/U is defined. The value k denotes a CPI block number. A motion state amount $X_k$ is expressed by the following Formula (59).

$$\mathbf{X}_k = \begin{bmatrix} x_k & y_k & z_k & \dot{x}_k & \dot{y}_k & \dot{z}_k \end{bmatrix}^T \qquad (59)$$

The motion estimator 23 estimates, from the motion state amount $X_k$ of the target, a Doppler frequency bin of the target in the k-th CPI block. A motion state amount of the sensor 1c at a time (k-1)$\Delta$t is denoted as $X_{s,k}$, and thereby a relative position $p_k$ of the sensor 1c and the target and relative velocity $v_k$ are obtained. The amount $X_{s,k}$ is defined by the following Formula (60) and $p_k$ and $v_k$ are defined by the following Formula (61).

$$\mathbf{X}_{s,k} = \begin{bmatrix} x_{s,k} & y_{s,k} & z_{s,k} & \dot{x}_{s,k} & \dot{y}_{s,k} & \dot{z}_{s,k} & \ddot{x}_{s,k} & \ddot{y}_{s,k} & \ddot{z}_{s,k} \end{bmatrix}^T \qquad (60)$$

$$\begin{cases} \mathbf{p}_k = \begin{bmatrix} x_k - x_{s,k} & y_k - y_{s,k} & z_k - z_{s,k} \end{bmatrix}^T \\ \mathbf{v}_k = \begin{bmatrix} \dot{x}_k - \dot{x}_{s,k} & \dot{y}_k - \dot{y}_{s,k} & \dot{z}_k - \dot{z}_{s,k} \end{bmatrix}^T \end{cases} \qquad (61)$$

Using $p_k$ and $v_k$, a Doppler frequency $f_{cal,k}$ of the target in the k-th CPI block is calculated using the following Formula (62).

$$f_{cal,k} = -\frac{2}{\lambda} \cdot \frac{\mathbf{p}_k \cdot \mathbf{v}_k^T}{R_{cal,k}}, \quad (k = 1,\ldots,U) \qquad (6\ 2)$$

Note that $\lambda$ denotes a transmission wavelength while $R_{cal,k}$ is defined by the following Formula (63).

$$R_{cal,k} = \left\| \mathbf{p}_k \cdot \mathbf{p}_k^T \right\| \qquad (6\ 3)$$

Moreover, when frequency resolution of the sensor 1c is denoted as $\Delta f$, a Doppler frequency bin of the target in the k-th CPI block is calculated from the following Formula (64).

$$Bf_{cal,k} = ceil\left\{ \frac{\mathrm{mod}\left(f_{cal,k}, PRF\right)}{\Delta f} \right\}, \quad (k = 1,\ldots,U) \qquad (6\ 4)$$

Note that PRF is a pulse repetition frequency and mod ($f_{cal,k}$, PRF) is a remainder from $f_{cal,k}$ divided by PRF.

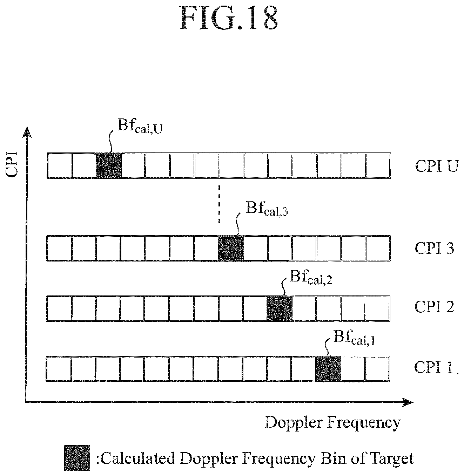

FIG. 18 is a diagram illustrating a Doppler frequency bin calculated from the Formula (64), which corresponds to a position of the target in each of the CPI blocks.
The signal integrator 9c acquires each of the resulting CPI blocks of the FFT from the CPI storage 19b. The signal integrator 9c also acquires a Doppler frequency bin of the target in each of the CPI blocks calculated by the motion estimator 23.
Thereafter, the signal integrator 9c performs signal integration by procedures described below.
First, the signal integrator 9c obtains a difference D(k) between a Doppler frequency bin $Bf_{cal,1}$ of a first CPI block and a Doppler frequency bin $Bf_{cal,k}$ of a k-th ($2 \leq k \leq U$) CPI block. The following Formula (65) defines the difference D(k).

$$D(k) = Bf_{cal,k} - Bf_{cal,1} \qquad (6\ 5)$$

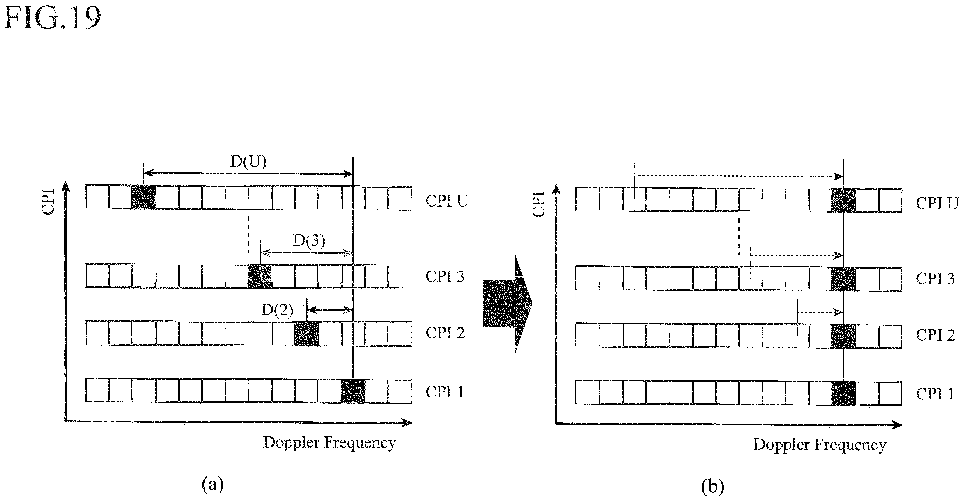

The signal integrator 9c further shifts a value of each cell of the k-th ($2 \leq k \leq U$) CPI block by D(k) cells in a circular manner such that a position of the target is aligned with the first CPI block. FIG. 19(a) illustrates a definition of D(k) and FIG. 19(b) illustrates a result of aligning are diagrams of the radar device and a result of aligning positions of the target by shifting cells in each CPI block by D(k) cells.
Furthermore, the signal integrator 9c integrates amplitude values of the same Doppler frequency bins of the respective resulting CPI blocks of the shifting processing. When an amplitude value of a $b_f$-th frequency bin of a k-th CPI block is denoted as
A(k, $b_f$) with the number of CPI blocks denoted as U, an integrated value I($b_f$) is obtained from the following Formula (66).

$$I(b_f) = \sum_{k=1}^{U} A(k, b_f) \quad (b_f = 1,\ldots,N_b) \qquad (6\ 6)$$

Note that $N_b$ denotes the number of frequency bins.
The target detector 10b of the radar device detects a Doppler frequency (Doppler frequency bin) corresponding to a largest integrated value from the integration results of the signal integrator 9c, and sets the detected one as a Doppler frequency of the target (step ST505). This processing in step ST505 is similar to that in step ST405 of the Embodiment 4 and thus details thereof are omitted.
The hypothesis tester 11b of the radar device calculates a Doppler frequency of the target on a basis of the motion hypothesis generated by the motion hypothesis generator 4, and tests the motion hypothesis through comparison with the Doppler frequency of the target detected by the target detector 10b (step ST506). This processing in step ST506 is similar to that in step ST406 of the Embodiment 4 and thus details thereof are omitted.

The best hypothesis updater 12b of the radar device determines, as the best hypothesis, the motion hypothesis having the largest integrated value from among the motion hypotheses (step ST507). This processing in step ST507 is similar to that in step ST407 of the Embodiment 4 and thus details thereof are omitted.

After the aforementioned processing of steps ST504 to ST507 is repeatedly executed on all the motion hypotheses, the target velocity outputter 22 of the radar device calculates Doppler velocity from the Doppler frequency of the target according to the best hypothesis ultimately retained in the best hypothesis updater 12b, and externally outputs the Doppler velocity by displaying on a display, outputting to a file, or the like (step ST508). This processing in step ST508 is similar to that in step ST408 of the Embodiment 4 and thus details thereof are omitted.

In this manner, the Embodiment 5 can obtain similar effects to those of the Embodiment 4 even with a configuration of performing motion estimation instead of performing phase compensation.

Within the scope of the present invention, the present invention may include a flexible combination of the respective embodiments, a modification of any component of the respective embodiments, or an omission of any component in the respective embodiments.

A radar device according to this invention is capable of motion compensation suitable for actual motion of the target and detection of a target with a low SNR requiring integration over a long time and thus is suitable for use as a radar device or the like to detect a target with radar.

| | |
|---|---|
| 1, 1b, 1c | sensor |
| 2 | correlation processor |
| 3, 3b | correlation result storage |
| 4, 4b | motion hypothesis generator |
| 5, 5b | motion hypothesis storage |
| 6 | range compensation amount calculator |
| 7 | phase compensation amount calculator |
| 8, 8b | motion compensator |
| 9, 9b, 9c | signal integrator |
| 10, 10b | target detector |
| 11, 11b | hypothesis tester |
| 12, 12b | best hypothesis updater (motion hypothesis selector) |
| 13 | target position outputter |
| 14 | integration result storage |
| 15 | target position estimator |
| 16 | beam direction selector |
| 17 | correlation result combiner |
| 18 | CPI divider |
| 19, 19b | CPI storage |
| 20 | phase compensator |
| 21, 21b | CPI FFT calculator |
| 22 | target velocity outputter |
| 23 | motion estimator |

**Claims**

1.  A radar device comprising:

> - a sensor to transmit transmission waves and to receive, as received waves, waves reflected from a target with respect to the transmission waves;
> - a correlation processor to perform correlation processing between the transmission waves transmitted by the sensor and the received waves with respect to the transmission waves, which is received by the sensor;
> - a correlation result storage to store resulting signals of the correlation processing performed by the correlation processor;
> - a motion hypothesis generator to generate a plurality of motion hypotheses of the target on a basis of a motion model of the target;
> - a motion hypothesis storage to store the motion hypotheses generated by the motion hypothesis generator;
> - a range compensation amount calculator to calculate a range compensation amount of the target relative to the sensor on a basis of the motion hypothesis stored in the motion hypothesis storage and the motion model;
- a phase compensation amount calculator to calculate a phase compensation amount of the target relative to the sensor on a basis of the motion hypothesis stored in the motion hypothesis storage and the motion model;
- a motion compensator to perform motion compensation on the resulting signals of the correlation processing stored in the correlation result storage by using calculation results of the range compensation amount calculator and the phase compensation amount calculator;
- a signal integrator to perform coherent integration on resulting signals of the motion compensation performed by the motion compensator;
- a target detector to detect a position of the target from an integration result of the signal integrator;
- a hypothesis tester to compare a detection result of the target detector with a position of the target calculated from the motion hypothesis stored in the motion hypothesis storage, and to determine whether or not said motion hypothesis is correct;
- a motion hypothesis selector to obtain, from among the motion hypotheses determined by the hypothesis tester as being correct, a motion hypothesis corresponding to a large integrated value obtained by the signal integrator; and
- a target position outputter to output a position of the target corresponding to a motion hypothesis obtained by the motion hypothesis selector.

2. A radar device comprising:

 - a sensor to transmit transmission waves, to receive waves reflected from a target with respect to the transmission waves, and to convert the received reflection waves into received signals;
- a CPI (Coherent Pulse Interval) divider to divide, at intervals of CPIs, the received signals from the sensor;
- a CPI storage to store pieces of the received signals divided into by the CPI divider;
- a motion hypothesis generator to generate a plurality of motion hypotheses of the target on a basis of a motion model of the target;
- a motion hypothesis storage to store the motion hypotheses generated by the motion hypothesis generator;
- a phase compensator to perform phase compensation on the respective pieces of the received signals stored in the CPI storage on a basis of the motion hypothesis stored in the motion hypothesis storage and the motion model; a CPI FFT (Fast Fourier Transform) calculator to perform FFT on resulting signals of the phase compensation performed by the phase compensator;
- a motion integrator to integrate amplitude values of the same Doppler frequency bins in resulting signals of the FFT performed by the CPI FFT calculator;
- a target detector to detect a Doppler frequency of the target from an integration result of the motion integrator;
- a hypothesis tester to compare a detection result from the target detector with a Doppler frequency of the target calculated from the motion hypothesis stored in the motion hypothesis storage, and to determine whether or not said motion hypothesis is correct;
- a motion hypothesis selector to obtain, from among the motion hypotheses determined by the hypothesis tester as being correct, a motion hypothesis corresponding to a large integrated value obtained by the signal integrator; and
- a target velocity outputter to calculate velocity of the target from the Doppler frequency of the target corresponding to the motion hypothesis obtained by the motion hypothesis selector, and to output the calculated velocity.

3. A radar device, comprising:

 - a sensor to transmit transmission waves, to receive waves reflected from a target with respect to the transmission waves, and to convert the received reflection waves into received signals;
- a CPI (Coherent Pulse Interval) divider to divide, at intervals of CPIs, the received signals from the sensor;
- a CPI FFT calculator to perform FFT on the respective pieces of the received signals divided into by the CPI divider;
- a CPI storage to store resulting signals of the FFT performed by the CPI FFT calculator;
- a motion hypothesis generator to generate a plurality of motion hypotheses of the target on a basis of a motion model of the target;
- a motion hypothesis storage to store the motion hypotheses generated by the motion hypothesis generator;
- a motion estimator to calculate, on a basis of the motion hypothesis stored in the motion hypothesis storage, a Doppler frequency bin of the target at a time point corresponding to each of the CPIs;
- a motion integrator to perform incoherent integration on the respective pieces of the received signals stored in the CPI storage on a basis of the Doppler frequency bin of the target calculated by the motion estimator;
- a target detector to detect a Doppler frequency of the target from an integration result of the motion integrator;
- a hypothesis tester to compare a detection result of the target detector and a Doppler frequency of the target calculated from the motion hypothesis stored in the motion hypothesis storage, and to determine whether or not said motion hypothesis is correct;
- a motion hypothesis selector to obtain, from among the motion hypotheses determined by the hypothesis tester as being correct, a motion hypothesis corresponding to a large integrated value obtained by the signal integrator; and
- a target velocity outputter to calculate velocity of the target from the Doppler frequency of the target corresponding to the motion hypothesis obtained by the motion hypothesis selector, and to output the calculated velocity.

4. The radar device according to claim 1,
wherein the motion hypothesis generator performs the generation of the plurality of motion hypotheses of the target on a basis of the motion model of the target in a three-dimensional space of rectangular coordinates.

5. The radar device according to claim 2,
wherein the motion hypothesis generator performs the generation of the plurality of motion hypotheses of the target on a basis of the motion model of the target in a three-dimensional space of rectangular coordinates.

6. The radar device according to claim 3,
wherein the motion hypothesis generator performs the generation of the plurality of motion hypotheses of the target on a basis of the motion model of the target in a three-dimensional space of rectangular coordinates.

7. The radar device according to claim 1,
wherein the motion compensator performs, as the motion compensation, range compensation and phase compensation, the range compensation being performed to shift, in a range direction, the resulting signals of the correlation processing of the range compensation amount calculated by the range compensation amount calculator, the phase compensation being performed to set back a phase of the resulting signals of the range compensation by the phase compensation amount calculated by the phase compensation amount calculator.

8. The radar device according to claim 1,
wherein, when the position of the target detected by the target detector is apart from the position of the target calculated from the motion hypothesis by a threshold value or more, the hypothesis tester determines that the motion hypothesis is incorrect.

9. The radar device according to claim 2,
wherein, when the Doppler frequency of the target detected by the target detector is apart from the Doppler frequency of the target calculated from the motion hypothesis by a threshold value or more, the hypothesis tester determines that the motion hypothesis is incorrect.

10. The radar device according to claim 3,
wherein, when the Doppler frequency of the target detected by the target detector is apart from the Doppler frequency of the target calculated from the motion hypothesis by a threshold value or more, the hypothesis tester determines that the motion hypothesis is incorrect.

11. The radar device according to claim 8,
wherein, when a difference in range bins between the position of the target detected by the target detector and the position of the target calculated from the motion hypothesis exceeds a number of range bins corresponding to a constant multiple of a range observation accuracy of the sensor, the hypothesis tester determines that the motion hypothesis is incorrect.

12. The radar device according to claim 8,
wherein, when a difference in Doppler frequency bins between the position of the target detected by the target detector and the position of the target calculated from the motion hypothesis exceeds a number of Doppler frequency bins corresponding to a constant multiple of a Doppler observation accuracy of the sensor, the hypothesis tester determines that the motion hypothesis is incorrect.

**13.** The radar device according to claim 9,
wherein, when a difference in Doppler frequency bins between the Doppler frequency of the target detected by the target detector and the Doppler frequency of the target calculated from the motion hypothesis exceeds a number of Doppler frequency bins corresponding to a constant multiple of a Doppler observation accuracy of the sensor, the hypothesis tester determines that the motion hypothesis is incorrect.

**14.** The radar device according to claim 10,
wherein, when a difference in Doppler frequency bins between the Doppler frequency of the target detected by the target detector and the Doppler frequency of the target calculated from the motion hypothesis exceeds a number of Doppler frequency bins corresponding to a constant multiple of a Doppler observation accuracy of the sensor, the hypothesis tester determines that the motion hypothesis is incorrect.

**15.** The radar device according to claim 1,
further comprising an integration result storage to store integration results of the signal integrator with respect to all the motion hypotheses stored in the motion hypothesis storage, and also store a determination result performed by the hypothesis tester,
wherein the motion hypothesis generator generates the plurality of motion hypotheses while narrowing down a generation scope on a basis of information stored in the integration result storage, and
wherein, every time when a new motion hypothesis is generated by the motion hypothesis generator, the motion hypothesis storage discards the stored motion hypothesis and stores the new motion hypothesis.

**16.** The radar device according to claim 2,
further comprising an integration result storage to store integration results of the signal integrator with respect to all the motion hypotheses stored in the motion hypothesis storage, and also store a determination result performed by the hypothesis tester,
wherein the motion hypothesis generator generates the plurality of motion hypotheses while narrowing down a generation scope on a basis of information stored in the integration result storage, and
wherein, every time when a new motion hypothesis is generated by the motion hypothesis generator, the motion hypothesis storage discards the stored motion hypothesis and stores the new motion hypothesis.

**17.** The radar device according to claim 3,
further comprising an integration result storage to store integration results of the signal integrator with respect to all the motion hypotheses stored in the motion hypothesis storage, and also store a determination result performed by the hypothesis tester,
wherein the motion hypothesis generator generates the plurality of motion hypotheses while narrowing down a generation scope on a basis of information stored in the integration result storage, and
wherein, every time when a new motion hypothesis is generated by the motion hypothesis generator, the motion hypothesis storage discards the stored motion hypothesis and stores the new motion hypothesis.

**18.** The radar device according to claim 1,
wherein the sensor sequentially performs observation at a same sampling time while switching beam directions of the transmission waves, and wherein the correlation result storage stores the resulting signal of the correlation processing of the correlation processor while associating said resulting signal of the correlation processing with a corresponding sampling time and a corresponding beam direction,
the radar device further comprising:

- a target position estimator to estimate a position of the target at each of the sampling times by using the motion hypothesis stored in the motion hypothesis storage;
- a beam direction selector to select a beam direction which covers the position of the target estimated by the target position estimator within an observation coverage; and
- a correlation result combiner to acquires, for each sampling time from among the resulting signals of the correlation processing stored in the correlation result storage, signals each of whose beam direction matches with the beam direction selected by the beam direction selector, and to combine the acquired signals, wherein the motion compensator performs motion compensation on a combination result of the correlation result combiner by using the calculation results of the range compensation amount calculator and the phase compensation amount calculator.

# FIG.1

EP 3 141 925 A1

# FIG.2

```
                    ┌─────────┐
                    │  Start  │
                    └─────────┘
                         │
                         ▼
            ┌────────────────────────┐
            │ Correlation Processing of │ ～ST101
            │     Received Waves       │
            └────────────────────────┘
                         │
                         ▼
            ┌────────────────────────┐
            │ Generate Motion Hypothesis │ ～ST102
            └────────────────────────┘
                         │
                         ▼
         ┌──────────────────────────────────┐
         │            Loop #1                 │
         │          1 ≤ m ≤ M                 │
         │  (M Represents Total Number of     │
         │  Motion Hypotheses to be Generated) │
         └──────────────────────────────────┘
              │                          ▲
              ▼  ST103          ST106     │
    ┌──────────────────┐   ┌──────────────────┐
    │ Motion Compensation │   │  Test Hypothesis  │
    └──────────────────┘   └──────────────────┘
              │  ST104          ST107
              ▼                    ▼
    ┌──────────────────┐   ┌──────────────────┐
    │ Signal Integration │   │ Update Best Hypothesis │
    └──────────────────┘   └──────────────────┘
              │  ST105                │
              ▼                       │
    ┌──────────────────┐             │
    │   Detect Target   │─────────────┘
    └──────────────────┘
                         │
                         ▼
         ┌──────────────────────────────────┐
         │            Loop #1                 │
         └──────────────────────────────────┘
                         │
                         ▼
            ┌────────────────────────┐
            │  Display Detection Result │ ～ST108
            └────────────────────────┘
                         │
                         ▼
                    ┌─────────┐
                    │   End   │
                    └─────────┘
```

29

EP 3 141 925 A1

# FIG.3

Target

K-th Sample

Third Sample

Second Sample

First Sample

Sample

Range

# FIG.4A

Elevation Angle
Direction

El_max

El_min

Az_min       Az_max

Azimuth Angle
Direction

# FIG.4B

R_max

R_min

30

# FIG.5

(a)

Result of Correlation Processing on K-th Sample

Result of Correlation Processing on Third Sample

Result of Correlation Processing on Second Sample

Result of Correlation Processing on First Sample

$BR_{C,2}$

$BR_{C,3}$

$BR_{C,K}$

(b)

Result of Range Compensation on K-th Sample

Result of Range Compensation on Third Sample

Result of Range Compensation on Second Sample

Result of Range Compensation on First Sample

# FIG.6

(a)

Coherent Integration
for Each Range Bin

Result of Phase Compensation
on K-th Sample

Result of Phase Compensation
on Third Sample

Result of Phase Compensation
on Second Sample

Result of Phase Compensation
on First Sample

Sample

Range

(b)

Signal Integration Result (FR Map)

Doppler Frequency

Range

# FIG.7

EP 3 141 925 A1

# FIG.8

```
                        ┌──────────┐
                        │  Start   │
                        └────┬─────┘
                             ↓
              ┌───────────────────────────┐
              │  Correlation Processing of │───ST201
              │       Received Waves       │
              └─────────────┬─────────────┘
                            ↓
         ╱───────────────────────────────────╲
        │            Loop #1                   │
        │          1 ≤ n ≤ N                    │
        │   (N Represents Number of            │
        │   Maximum Repetition Times)          │
         ╲───────────────┬─────────────────────╱
                         ↓
              ┌───────────────────────┐
              │ Generate Motion Hypothesis │───ST202
              └───────────┬───────────┘
                          ↓
         ╱───────────────────────────────────╲
        │            Loop #2                   │
        │          1 ≤ m ≤ M                    │
        │   (M Represents Number of Motion     │
        │   Hypotheses Generated at One Time)  │
         ╲───────────────┬─────────────────────╱
```

ST203 — Motion Compensation

ST204 — Signal Integration

ST205 — Detect Target

ST206 — Test Hypothesis

ST207 — Update Best Hypothesis

Loop #2

ST208 — Generation of Motion Hypothesis Required?

NO

YES

Loop #1

Display Detection Result — ST209

End

FIG.9

# FIG.10

# FIG.11

Start

Correlation Processing of
Received Waves —— ST301

Generate Motion Hypothesis —— ST302

Loop #1
$1 \leq m \leq M$
(M Represents Total Number of
Motion Hypotheses to be Generated)

ST303

Select Beam Direction

ST304

Combine Correlation Results

ST305

Motion Compensation

ST306

Signal Integration

ST307

Detect Target

ST308

Test Hypothesis

ST309

Update Best Hypothesis

Loop #1

Display Detection Result —— ST310

End

FIG.12

EP 3 141 925 A1

# FIG.13

```
                    ┌─────────┐
                    │  Start  │
                    └─────────┘
                         │
                         ▼
          ┌──────────────────────────┐
          │      CPI Division        │──── ST401
          └──────────────────────────┘
                         │
                         ▼
          ┌──────────────────────────┐
          │ Generate Motion Hypothesis│──── ST402
          └──────────────────────────┘
                         │
                         ▼
     ┌────────────────────────────────────────┐
     │              Loop #1                   │
     │            1 ≤ m ≤ M                    │
     │    (M Represents Total Number of       │
     │  Motion Hypotheses to be Generated)    │
     └────────────────────────────────────────┘
              │                          
              ▼  ST403              ST406
     ┌──────────────────┐      ┌──────────────────┐
     │ Phase Compensation│      │  Test Hypothesis │
     └──────────────────┘      └──────────────────┘
              │  ST404                   │  ST407
              ▼                          ▼
     ┌──────────────────┐      ┌──────────────────────┐
     │ Signal Integration│      │ Update Best Hypothesis│
     └──────────────────┘      └──────────────────────┘
              │  ST405
              ▼
     ┌──────────────────┐
     │   Detect Target  │
     └──────────────────┘
                         
          ┌────────────────────────────────┐
          │            Loop #1             │
          └────────────────────────────────┘
                         │
                         ▼
          ┌──────────────────────────┐
          │ Display Detection Result │──── ST408
          └──────────────────────────┘
                         │
                         ▼
                    ┌─────────┐
                    │   End   │
                    └─────────┘
```

# FIG.14

FIG.15B

FIG.15A

# FIG.16

```
Sensor (1c) → CPI Divider (18) → CPI FFT Calculator (21b) → CPI Storage (19b)

Motion Hypothesis Generator (4) → Motion Hypothesis Storage (5) → Motion Estimator (23) → Signal Integrator (9c)

Target Detector (10b) → Hypothesis Tester (11b) → Best Hypothesis Updater (12b) → Target Velocity Outputter (22)
```

EP 3 141 925 A1

# FIG.17

```
                    ┌─────────┐
                    │  Start  │
                    └─────────┘
                         │
                         ▼
            ┌──────────────────────┐
            │     CPI Division     │─── ST501
            └──────────────────────┘
                         │
                         ▼
            ┌──────────────────────┐
            │       CPI FFT        │─── ST502
            └──────────────────────┘
                         │
                         ▼
            ┌──────────────────────┐
            │ Generate Motion      │─── ST503
            │ Hypothesis           │
            └──────────────────────┘
                         │
                         ▼
       ┌─────────────────────────────────────┐
       │              Loop #1                 │
       │            1 ≤ m ≤ M                 │
       │   (M Represents Total Number of      │
       │  Motion Hypotheses to be Generated)  │
       └─────────────────────────────────────┘
                         │
                         ▼
            ┌──────────────────────┐
            │  Signal Integration  │─── ST504
            └──────────────────────┘
                         │
                         ▼
            ┌──────────────────────┐
            │    Detect Target     │─── ST505
            └──────────────────────┘
                         │
                         ▼
            ┌──────────────────────┐
            │   Test Hypothesis    │─── ST506
            └──────────────────────┘
                         │
                         ▼
            ┌──────────────────────┐
            │ Update Best Hypothesis│─── ST507
            └──────────────────────┘
                         │
                         ▼
            ┌──────────────────────┐
            │       Loop #1        │
            └──────────────────────┘
                         │
                         ▼
            ┌──────────────────────┐
            │Display Detection Result│─── ST508
            └──────────────────────┘
                         │
                         ▼
                    ┌─────────┐
                    │   End   │
                    └─────────┘
```

# FIG.18

:Calculated Doppler Frequency Bin of Target

# FIG.19

(a)

(b)

## INTERNATIONAL SEARCH REPORT

| International application No. |
|---|
| PCT/JP2014/062724 |

A. CLASSIFICATION OF SUBJECT MATTER
*G01S7/288*(2006.01)i, *G01S7/292*(2006.01)i, *G01S13/532*(2006.01)i

According to International Patent Classification (IPC) or to both national classification and IPC

B. FIELDS SEARCHED

Minimum documentation searched (classification system followed by classification symbols)
G01S7/288, G01S7/292, G01S13/532

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-74602 A (Mitsubishi Electric Corp.), 24 April 2014 (24.04.2014), paragraphs [0011] to [0013], [0017] to [0029], [0067] to [0103]; fig. 1, 3, 11 to 12 (Family: none) | 1-18 |
| A | Isao AOYAMA et al., "Long Term Integration Algorithm for Accelerated Target using Satellite Broadcasting Wave Passive Radar", IEICE Technical Report, 13 February 2014 (13. 02.2014), vol.113, no.435, pages 7 to 11 | 1-18 |
| A | Hiroshi KAMEDA et al., "Long Term Integration Method for Accelerated Targets using Data Assimilation", IEICE Technical Report, 14 February 2013 (14.02.2013), vol.112, no.439, pages 49 to 54 | 1-18 |

☒ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 24 June, 2014 (24.06.14) | 01 July, 2014 (01.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 141 925 A1**

**INTERNATIONAL SEARCH REPORT**

International application No.

PCT/JP2014/062724

C (Continuation).   DOCUMENTS CONSIDERED TO BE RELEVANT

| Category* | Citation of document, with indication, where appropriate, of the relevant passages | Relevant to claim No. |
|---|---|---|
| A | Teruyuki HARA et al., "An Algorithm for Detecting Acceleration Change Target Using Phase Compensation between CPIs", Proceedings of the 2005 IEICE Communications Society Conference 1, 07 September 2005 (07.09.2005), page 276 | 3,6,10,14,17 |
| A | JP 2004-309209 A  (Mitsubishi Electric Corp.), 04 November 2004 (04.11.2004), paragraphs [0020] to [0044]; fig. 1 to 5 (Family: none) | 1-18 |
| A | JP 10-104351 A  (Mitsubishi Electric Corp.), 24 April 1998 (24.04.1998), paragraphs [0068] to [0083] (Family: none) | 1-18 |
| A | JP 8-160120 A  (Hitachi, Ltd.), 21 June 1996 (21.06.1996), paragraphs [0008] to [0009], [0021] to [0025]; fig. 1 to 3, 7 to 8 (Family: none) | 1-18 |
| A | JP 7-95592 A  (Massachusetts Institute of Technology), 07 April 1995 (07.04.1995), paragraphs [0039] to [0041] & US 5557684 A | 1-18 |

Form PCT/ISA/210 (continuation of second sheet) (July 2009)

47

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011174866 A

**Non-patent literature cited in the description**

- **FUKUSHIMA et al.** Improvement of Accelerating Target Detection Performance of a Doppler Radar Using PDI Processing. *IEICE Transactions on Communications,* November 1999, vol. J82-B (11), 2161-2169

- **HARA et al.** An Algorithm for Detecting Constant Acceleration Target Using Phase Compensation between CPIs. *Space, Aeronautical and Navigational Electronics, IEICE Technical Report,* August 2006, vol. 106 (271), 5-9